# EUROPÄISCHE PATENTSCHRIFT

(11) **EP 3 280 575 B1**
(45) Veröffentlichungstag und Bekanntmachung des Hinweises auf die Patenterteilung: **02.10.2019**
(21) Anmeldenummer: 16713408.9
(22) Anmeldetag: 30.03.2016
(51) Int. Cl.: B27N 3/14, E04C 2/16

(54) **PANEEL**
PANEL
PANNEAU

(30) Priorität: 10.04.2015 DE 102015206469; 28.05.2015 DE 102015209759
(43) Veröffentlichungstag der Anmeldung: 14.02.2018
(73) Patentinhaber: Mayfair Vermögensverwaltungs SE, 20354 Hamburg (DE)
(72) Erfinder: NIJSSE, Jeroen, 4433BG Hoedekenskerke (NL)
(74) Vertreter: Gille Hrabal
(86) Internationale Anmeldenummer: PCT/EP2016/056861
(87) Internationale Veröffentlichungsnummer: WO 2016/162244

(56) Entgegenhaltungen:
- EP-A1- 0 860 255
- EP-A2- 1 475 205
- AU-B2- 622 882
- CA-C- 2 296 554
- CN-U- 201 626 023
- CN-U- 202 805 368
- DE-A1- 2 558 315
- DE-A1-102011 118 009
- US-A- 5 662 227
- US-A1- 2002 100 565
- US-A1- 2010 003 356
- US-A1- 2011 165 411
- US-A1- 2014 154 147

## Beschreibung

Die Erfindung betrifft ein Paneel auf Basis von Halmgewächsen.

Paneelen auf Basis von Halmgewächsen wie Stroh oder Reet, also Schilfrohr, haben gegenüber herkömmlichen Spanplatten, OSB oder MDF Paneelen aus Holzschnitzeln, Holzspäne oder Holzpartikeln den Vorteil, Abfallprodukte der Landwirtschaft anstelle von Bäumen als Rohstoffe verwenden zu können. Jedoch ist die Verarbeitung von Halmgewächsen aufgrund der langen, dünnen halmartigen Struktur ungleich schwieriger als die Verarbeitung von Holz. Damit sich Paneelen auf Basis von Halmgewächsen auf dem Markt gegenüber den herkömmlichen holzbasierten Paneelen behaupten können, sind ferner die Herstellungsmethoden so weiterzuentwickeln, dass Paneelen auf Basis von Halmgewächsen mit Eigenschaften erzeugt werden können, die in bestimmten Aspekten Vorteile gegenüber Paneelen auf Holzbasis aufweisen. Probleme bei heutigen Paneelen auf Holzbasis bereiten z.B. die rauen Oberflächen nach der Herstellung, wodurch üblicherweise Holzspanplatten oder Furnier als Zwischenschicht verwendet werden, um eine hinreichend glatte Oberfläche zum Aufbringen von bedruckbaren Kraftpapier zu erhalten. Eine solche Zwischenschicht erhöht jedoch den Herstellungsaufwand und bereitet durch die unterschiedlichen Feuchtigkeitsgehalte Probleme in Form von Verformungen des Endprodukts über die Zeit oder bei Raumklimaveränderungen. Nachteilig an Spanplatten (engl. "particle boards") ist das relativ hohe Gewicht, welches die Handhabung erschwert.

Eine Fertigungsanlage zur Herstellung eines Paneels auf Basis von Halmgewächsen ist durch viele, verkettete Prozessstationen und ein aufwändiges Materialtransportsystem zwischen den Prozessstationen z.B. auf Basis eines Luftstromkanals sehr komplex, aufwändig und kostenintensiv. Um den Wünschen des Markes Rechnung zu tragen, genügt es jedoch nicht, nur eine einzige Art von Paneel mit derselben Materialsorte, demselben Schichtaufbau und derselben Schichtbeschaffenheit in einer Fertigungsanlage herstellen zu können. Eine größere Flexibilität hinsichtlich der in derselben Fertigungsanlage herstellbaren Paneelen bezüglich der verarbeitbaren Längen und Längenverteilungen des Materials aus Halmgewächsen, also Halmstücke, über den Querschnitt eines Paneels sowie hinsichtlich des Schichtaufbaus eines Paneels ist daher für ein wirtschaftliche Herstellung erforderlich.

Jedoch sind die derzeit bekannten Streuköpfe nicht in der Lage, sowohl Materiallose von langen Halmstücken mit einer Länge von bis zu 150 mm ebenso gut zu verarbeiten wie Materiallose mit kurzen Halmstücken mit einer Länge kleiner 4 mm. Denn kurze Halmstücke fallen leichter durch auch kleine Öffnungen und können bislang mit Streuköpfen, die auch lang Halmstücke verarbeiten können, nur unzulänglich in Förderbandrichtung verteilt und auf das Förderband gestreut werden. Ein hoher Durchsatz von kurzen Halmstücken in der Mitte des Streukopfes und dadurch verursachte Hügelbildung in der Streugutmatte auf dem Förderband mit der Konsequenz inhomogen beschaffener Paneels mit Einschlüssen und großer Dichtestreuung in Längsrichtung ist die Folge.

Streuköpfe zur Herstellung von Platten sowie Platten aus verschiedenen, nachwachsenden Rohstoffen werden in den Druckschriften CA02296554C, WO0202886 und EP0860255A1 behandelt. Eine Lösung für die oben beschriebenen Probleme geht aus diesen Druckschriften jedoch nicht hervor.

US20110165411A1 offenbart ein Verfahren zur Herstellung eines Paneels aus lignocellulosen Partikeln, die mittels Ozon vorbehandelt wurden. Die Wachsschicht auf der Oberfläche der Partikel soll auf diese Weise abgebaut werden, damit ein Bindemittel besser an der Oberfläche der Partikel anhaftet.

Es ist daher Aufgabe der Erfindung, weiterentwickelte Paneelen bereitzustellen.

Zur Lösung der Aufgabe dient ein Paneel gemäß Anspruch 1.

Es wird ein Verfahren zur Herstellung eines Paneels offenbart, wobei zunächst Halme eines oder mehrerer Halmgewächse wie Stroh und/oder Reet vorzugsweise gekürzt und überwiegend oder zu einem Anteil von über 80% in Halmlängsrichtung gespalten werden, um längliche, näherungsweise halbschalenförmige Halmhalbschalen zu erhalten, die dann mit Bindemittel versehen werden und mit einem Streukopf auf ein in Förderbandrichtung laufendes Förderband gestreut werden, um dort eine Streugutmatte oder eine Schicht einer Streugutmatte aus den Halmhalbschalen anzuhäufen, die anschließend unter Hitzeeinwirkung verpresst wird, um ein rohes Paneel zur Verwendung als Bauplatte zu erhalten oder ein weiterverarbeitetes Paneel beispielsweise zur Verwendung als Fußbodenbelag oder zur Herstellung von Möbeln zu erzeugen, wobei die Halmhalbschalen durch eine Materialzuflusseinheit des Streukopfs von oben auf eine Oberseite einer Walzenreihe mit in einer Walzenreihenförderrichtung hintereinander angeordneter Förderwalzen des Streukopfes zugeführt werden und von dort entlang der Oberseite der Walzenreihe unmittelbar auf den rotierenden Förderwalzen in die Walzenreihenförderrichtung befördert werden, wobei jeweils ein Teil der Halmhalbschalen während des Beförderns entlang der Oberseite der Walzenreihe durch mehrere in Walzenreihenförderrichtung verteilte Vertikaldurchlässe durch die Walzenreihe nach unten in Richtung Förderband gelangt, wobei sich jeder Vertikaldurchlass periodisch öffnet und schließt und eine im Wesentlichen rechteckige Vertikaldurchlassöffnung über eine gesamte Walzenreihenbreite bereitstellt, die sich kontinuierlich vergrößert, verkleinert und schließt, um nur einen Teil der Halmhalbschalen durch die Walzenreihe nach unten zu befördern.

Es wird weiterhin ein Streukopf insbesondere zur Durchführung des oben beschriebenen Verfahrens zum Streuen von länglichen Halmhalbschalen aus einem Halmgewächs auf ein Förderband zur Herstellung eines Paneels mit einer Materialzuflusseinheit und einer Walzenreihe mit hintereinander angeordneten Förderwalzen offenbart, wobei die Förderwalzen abwechselnd eine rotationssymmetrische Mantelfläche und eine nicht rotationssymmetrische Mantelfläche mit Vertiefungen und/oder Erhebungen aufweisen.

Durch Förderwalzen mit abwechselnd rotationssymmetrischer und nicht rotationssymmetrischer Mantelfläche kann planmäßig reduziertes Durchlassen von Halmhalbschalen durch die Walzenreihe nach unten in Richtung Förderband erreicht und damit ein besonders homogenes Verteilen auch kurzer Halmhalbschalen über die gesamte Walzenreihe ermöglicht werden. Insbesondere können so auf besonders einfache Weise sich öffnende und schließende Vertikaldurchlässe gebildet werden.

Insbesondere ist der Streukopf ein Streukopf zum Streuen von länglichen, näherungsweise halbschalenförmigen, mit Bindemittel versehenen Halmhalbschalen auf ein in Förderbandrichtung laufendes Förderband zur Herstellung eines rohen Paneels zur Verwendung als Bauplatte oder ein weiterverarbeitetes Paneel beispielsweise zur Verwendung als Fußbodenbelag oder zur Herstellung von Möbeln, wobei Halme eines oder mehrerer Halmgewächse wie Stroh und/oder Reet zum Erzeugen der Halmhalbschalen vorzugsweise gekürzt und überwiegend oder zu einem Anteil von über 80% in Halmlängsrichtung gespalten wurden, mit einer Materialzuflusseinheit, einer Walzenreihe mit hintereinander angeordneter Förderwalzen, die zum Transportieren von Halmhalbschalen in nur eine Walzenreihenförderrichtung der Walzenreihe drehen können, und mehrere in Walzenreihenförderrichtung verteilte Vertikaldurchlässe, die so beschaffen sind, dass die Halmhalbschalen durch die Materialzuflusseinheit von oben auf eine Oberseite der Walzenreihe zugeführt werden können und von dort entlang der Oberseite der Walzenreihe unmittelbar auf den rotierenden Förderwalzen in die Walzenreihenförderrichtung befördert werden können, wobei jeweils ein Teil der Halmhalbschalen während des Beförderns entlang der Oberseite der Walzenreihe durch die Vertikaldurchlässe nach unten in Richtung Förderband gelangen können, wobei sich jeder Vertikaldurchlass periodisch öffnen und schließen kann und eine im Wesentlichen rechteckige Vertikaldurchlassöffnung über eine gesamte Walzenreihenbreite bereitstellen kann, die sich kontinuierlich vergrößern, verkleinern und schließen kann, um nur einen Teil der Halmhalbschalen durch die Walzenreihe nach unten befördern zu können.

In diesem Dokument sind mit Halmgewächs solche Pflanzen gemeint, die eine Halmstruktur aufweisen. Mit Halm ist ein Halm oder Stängel mit einer längsgewachsenen und näherungsweise zylindrischen Form gemeint, wobei bei einem Halm oder einer Halmstruktur regelmäßig eine Faserausrichtung in Längsrichtung vorliegt. Stroh und Reet weisen solche Halme auf. Mit Anteil von Halmhalbschalen sind Anteile in Gewichtsprozent gemeint, sofern nicht anders angegeben.

Ein Spalten der Halme in Halmlängsrichtung zum Erhalten von Halmhalbschalen kann z.B. durch speziell für die Verarbeitung von Stroh und Reet angepasste Zerspanungsmaschinen erfolgen. Halmhalbschalen ermöglichen verglichen mit nicht gespaltenen Halmen eine besonders hohe Bindemittelhaftung und können zu Paneelen mit besonders hoher Dichte und wenig Einschlüssen verarbeitet werden.

Ein rohes Paneel ist eine Platte mit unbearbeiteten Oberflächen nach dem Heizpressen, also ohne z.B. Zuschleifen, Beschichten etc., und kann als solche als Bauplatte für den Rohbau und Innenausbau verwendet werden. Ein weiterverarbeitetes Paneel ist ein rohes Paneel, welches z.B. nach einem Abtragen durch z.B. Abschleifen, Beschichten durch z.B.

Aufbringen eines Starkpapiers, Dekorpapiers und/oder einer transparenten Deckschutzschicht als Fußboden- oder Wandbelag für den Innenausbau verwendet werden kann.

Durch das offenbarte Verfahren und/oder den offenbarten Streukopf können Paneelen mit Dichten von mindestens 400 kg/m³ und/oder höchstens 950 kg/m³ erzeugt werden.

Insbesondere kann ein Paneel hergestellt werden, dass so beschaffen ist, dass es die mechanischen Anforderungen an eine OSB/1-Platte für den Innenausbau einschließlich Möbel zur Verwendung im Trockenbereich, OSB/2, OSB/3 für Platten für tragende Zwecke zur Verwendung im Feuchtebereich und/oder OSB/4 für erhöht lasttragende Verwendungen gemäß der Norm EN 300 erfüllen kann. Ein solches Paneel hat vorzugsweise eine Dichte von mindestens 520 kg/m³ und/oder höchstens 950 kg/m³, bevorzugt höchstens 720 kg/m³. Beispielsweise kann bei einem Paneel an der unteren Dichte-Grenze durch einen hohen Bindemittelanteil ebenfalls der OSB/4-Standard erfüllt werden.

Insbesondere kann ein Paneel hergestellt werden, dass so beschaffen ist, dass es die mechanischen Anforderungen an eine Spanplatte (engl. "Particle Board") der Klasse P1, P3, P5 und/oder P7 gemäß der Norm EN 312 erfüllen kann. Ein solches Paneel hat vorzugsweise eine Dichte von mindestens 570 kg/m³ und/oder höchstens 950 kg/m³, bevorzugt höchstens 680 kg/m³. Beispielsweise kann bei einem Paneel an der unteren Dichte-Grenze durch einen hohen Bindemittelanteil ebenfalls der P7-Standard erfüllt werden. Sämtliche in dieser Anmeldung erwähnten, einschlägigen mechanischen Kennwerte beziehen sich auf dieselben - an einer Stelle in diesem Dokument angegebenen - Normen und Standards und zwar in den Fassungen dieser Normen und Standards zum Prioritätstag. Mechanische Anforderungen oder Belastungsfähigkeit umfasst insbesondere Biegefestigkeit in Hauptachse (engl. "Bending strenth in major axis"), Biegefestigkeit in Nebenachse (engl. "Bending strenth in minor axis"), Elastizitätsmodul (MOE) in Hauptachse, Elastizitätsmodul in Nebenachse, Querzugfestigkeit (engl. "Internal bond strength"), Biegefestigkeit nach zyklischem Test in Hauptachse (engl. cyclic test), Querzugfestigkeit nach zyklischem Test und/oder Querzugfestigkeit nach Kochtest (engl. "boil test").

Insbesondere kann ein Paneel hergestellt werden, dass so beschaffen ist, dass es mindestens einen oder alle der Werte oder Wertebereiche der Belastungsfähigkeit erfüllen kann, die unten im Zusammenhang mit dem Paneel, welches nach diesem Verfahren herstellbar ist, angegeben sind.

Im Unterschied zu Paneelen auf Holzbasis können mit dem offenbarten Verfahren und/oder dem offenbarten Streukopf nun Paneelen auf Basis von Stroh und/oder Reet mit einem Anteil von bis zu 80% Halmhalbschalen mit einer Länge kleiner 4 mm erzeugt werden. Ein auf diese Weise herstellbares Paneel kann eine homogene Dichteverteilung mit einer Standardabweichung von höchstens 20 %, bevorzugt 15 %, besonders bevorzugt 10 % über die Längserstreckung des Paneels aufweisen. Die Oberfläche des Paneels ist so glatt, dass nach einem nur geringfügigen Abschleifen der Oberflächen bereits unmittelbar auf die sonst unbehandelte Oberfläche direkt ein bedruckbares und später sichtbares melamingetränktes Kraftpapier mittels Verpressen unter Hitzeeinfluss aufgebracht werden kann.

Bei OSB Paneelen auf Holzbasis ist die Oberfläche sehr rau, so dass üblicherweise eine Zwischenschicht zwischen die Paneeloberfläche und dem später sichtbaren Kraftpapier zwecks Glättung erforderlich ist. Diese zusätzliche Zwischenschicht kann eine zusätzliche Holzspanplatte oder ein Furnier sein, also ca. 0,3 mm bis 6 mm dicke Blätter aus Holz, die durch verschiedene Säge- und Schneideverfahren von einem Baumstamm abgetrennt werden. Dies ist nicht nur sehr aufwändig in der Herstellung, sondern bereitet häufig durch die unterschiedlichen Feuchtigkeitsgehalte der verschiedenen Holzplattenschichten Verformungsprobleme. Durch die nun herstellbaren Paneelen auf der Basis von Stroh und/oder Reet kann der Herstellungsaufwand und die oben beschriebenen Verformungsprobleme reduziert werden.

Gegenüber Holzspanplatten haben die nun herstellbaren Paneelen den Vorteil, dass die mechanischen Anforderungen einer Klasse, z.B. P1, P3, P5 oder P7, mit besonders geringer Dichte erzielt werden kann. Das Paneel ist daher gegenüber Spanplatten besonders leicht und kann dadurch besonders gut gehandhabt werden. Im Übrigen ist ein nur geringer Materialeinsatz zur Herstellung gegenüber Holzspanplatten erforderlich.

Mit Oberseite einer Walzenreihe ist die der Materialzuflusseinheit zugewandte Seite gemeint. Grundsätzlich umfasst die Oberseite die gesamte, sichtbare Fläche in Draufsicht unabhängig davon, ob die Förderwalzen rotieren oder stillstehen. Die Walzenreihenförderrichtung ist quer zu den Förderwalzenachsen orientiert, wobei die Förderwalzenachsen sämtlicher Förderwalzen regelmäßig parallel angeordnet sind.

Entlang der Oberseite der Walzenreihe unmittelbar auf den Förderwalzen in die Walzenreihenförderrichtung befördert werden meint, dass die Halmhalbschalen an der Oberseite von der einen zur nächsten Förderwalze bewegt werden und dabei stets an der Oberseite bleiben, ohne dass nennenswerte Mengen Halmhalbschalen unplanmäßig zwischen zwei benachbarten Förderwalzen durch einen Schließspalt nach unten in den Bereich unterhalb der Walzenreihe gelangen. Die Walzenreihenbreite erstreckt sich längs der Förderwalzenachse - also quer zur Walzenreihenförderrichtung - und umfasst den Bereich der Walzenreihe, der mit den Halmhalbschalen in Berührung kommen kann.

Ein planmäßiges Passieren der Halmhalbschalen von der Oberseite der Walzenreihe durch die Walzenreihe hindurch in den Bereich unterhalb der Walzenreihe ist mit Ausnahme des Anfangs und des Endes der Walzenreihe ausschließlich zwischen zwei benachbarten Förderwalzen oder durch die periodisch öffnenden und schließenden Vertikaldurchlässe vorgesehen, die eine sich im Betrieb kontinuierliche vergrößernde, verkleinernde und schließende Vertikaldurchlassöffnung bereitstellen. Ein geschlossener Vertikaldurchlass, also eine geschlossene Vertikaldurchlassöffnung, ist nicht dicht geschlossen, sondern weist wie die benachbarten Förderwalzen einen Schließspalt auf, der so eng ist, dass eine Kollision der Förderwalzen zuverlässig vermieden und gleichzeitig keine nennenswerten Mengen Halmhalbschalen unplanmäßig durch einen Schließspalt nach unten gelangen kann.

Ein solcher Schließspalt bei einem geschlossenen Vertikaldurchlass oder zwischen den Wirkkreisen zweier benachbarter Förderwalzen kann beispielsweise eine Schließspaltweite von mindestens 0,1 mm, bevorzugt 0,5 mm, besonders bevorzugt 1 mm und/oder höchstens 4 mm, bevorzugt höchstens 3 mm, besonders bevorzugt 2 mm aufweisen. Unter einem Wirkkreis einer Förderwalze ist der Kreis mit einem Außendurchmesser zu verstehen, welcher dem Umlauf der äußersten Erstreckung des Förderwalzenquerschnitts - quer zur Förderwalzenachse - entspricht, wobei die äußerste Erstreckung in der Regel eine nicht rotationssymmetrische Erhebung ist.

Durch das offenbarte Verfahren und/oder den offenbarten Streukopf kann ein besonders homogenes Verteilen und Streuen der Halmhalbschalen über die gesamte Fläche der Walzenreihe auf das Förderband und damit eine homogene Streugutmatte mit geringen Dichteschwankungen in Längsrichtung, also Förderbandrichtung, erzielt werden. Darüber hinaus kann insbesondere durch die im Wesentlichen rechteckförmige Querausdehnung der Vertikaldurchlassöffnung eine erste Vororientierung der Halmhalbschalen quer zur Förderbandrichtung erreicht werden.

Ein großer Vorteil liegt ferner darin, dass durch das offenbarte Verfahren und/oder den offenbarten Streukopf nun lange Halmhalbschalen mit einer Länge von bis zu 150 mm genauso wie kurze Halmhalbschalen mit einer Länge kleiner 4 mm zuverlässig und effizient zu einer homogenen Streugutmatte mit geringer Dichtevariation in Förderbandrichtung angehäuft werden können. Eine Herstellung von qualitativ hochwertigen und insbesondere lasttragenden Paneelen auf der Basis von Stroh und/oder Reet kann so ermöglicht werden.

Dadurch, dass lange wie kurze Halmhalbschalen verarbeitet werden können, wird eine flexible Produktion von Paneelen mit unterschiedlichen Längenverteilungen der Halmhalbschalen durch dieselbe Produktionslinie ermöglicht. Paneele mit unterschiedlicher Beschaffenheit und Eigenschaften können auf diese Weise mit besonders geringem Herstellungsaufwand produziert und die Produktion zur Herstellung der verschiedenen Paneel-Typen besonders schnell und mit nur geringem Aufwand umgestellt werden.

Die folgenden Ausführungsformen und Weiterentwicklungen betreffen sowohl das Verfahren als auch den Streukopf.

Bevorzugt sind bei dem Verfahren und/oder dem Streukopf bei einer Walzenreihe sämtliche zwischen einer zweiten und einer vorletzten Förderwalze angeordnete Förderwalzen unmittelbar aneinander angrenzend angeordnet, also im Abstand eines Schließspaltes zueinander angeordnet, und/oder es ist eine übereinstimmende Drehrichtung für ein Fördern der Halmhalbschalen in Walzenreihenförderrichtung vorgesehen, insbesondere um eine quer zur Förderbandrichtung orientierte Förderwalzenachse. Insbesondere sind die Förderwalzen zudem in Richtung der Drehachse näherungsweise zentriert zum Förderband angeordnet. Ein effektives Verteilen kann so erzielt werden und einem unplanmäßigen Bewegen von Halmhalbschalen durch die Walzenreihe nach unten entgegengewirkt werden.

Bevorzugt bei dem Verfahren und/oder dem Streukopf ist, dass eine Förderwalze mit einer rotationssymmetrischen Mantelfläche eine Glattwalze ist und eine Förderwalze mit einer nicht rotationssymmetrische Mantelfläche mit Vertiefungen und/oder Erhebungen eine Planetenwalze ist, vorzugsweise mit mehreren Planetenzylindern als Erhebungen auf einer Mantelfläche eines Grundzylinders; und/oder ein periodisch öffnender und schließender Vertikaldurchlass zwei unmittelbar aneinander angrenzende Förderwalzen umfasst oder daraus besteht, wobei die eine Förderwalze eine Glattwalze und/oder die andere Förderwalze eine Planetenwalze ist.

Eine Glattwalze hat eine Zylinderform mit einer glatten Mantelfläche, die symmetrisch zur Förderwalzenachse ist. Eine Planetenwalze umfasst einen Grundzylinder mit einer Zylinderform mit einer glatten Mantelfläche sowie mindestens zwei zum Grundzylinder parallel ausgerichtete insbesondere glatte zylinderförmige Planetenzylinder mit gleichem Außendurchmesser, wobei die Planetenzylinder einen kleineren Außendurchmesser als der Grundzylinder aufweisen und fest mit der Mantelfläche des Grundzylinders verbunden sind.

Zylinderform meint ein Zylinder mit kreisrundem Querschnitt. Glatte Mangelfläche meint, dass die Mantelfläche, also die Außenfläche oder Umfangsfläche des Zylinders, keine planmäßig vorgesehenen Vertiefungen oder Erhebungen aufweist, sondern lediglich eine Rauigkeit im Rahmen von Fertigungstoleranzen. Parallel ausgerichtet meint zur Förderwalzenachse parallel orientiert. Fest mit der Mantelfläche des Grundzylinders verbunden meint zum Beispiel durch eine Schweißverbindung oder Verschraubung so fest verbunden, dass im Betrieb kein relatives Bewegen und keine Lösen der Verbindung zu erwarten ist.

Zylinderform meint rotationssymmetrische, kreisrunde Zylinderform. Glatte Mantelfläche meint, dass der Wirkkreis bei einer Rotation im Wesentlichen dem Zylinderdurchmesser entspricht, also kein Außenprofil mit radialen Erhebungen in Umfangrichtung und über die Förderwalzenbreite vorgesehen ist und sich die Oberflächenrauigkeit im Rahmen der üblichen Fertigungstoleranzen bewegt.

Durch das Zusammenspiel einer Glattwalze und einer Planetenwalze können lange und kurze Halmhalbschalen gleichermaßen zuverlässig und effektiv verarbeitet, also homogen über die Fläche der Walzenreihe nach unten gestreut werden. Die Halmhalbschalen werden in der Regel als lose Materialansammlungen größeren Umfangs über die Materialzuflusseinheit auf die Walzenreihe befördert, so dass sich eine dicke Schicht Halmhalbschalen auf der Walzenreihe anhäuft. Durch die Planetenzylinder werden lange Halmhalbschalen in Walzenreihenförderrichtung gedrückt, ohne zwangsläufig in die Vertikaldurchlassöffnung gezogen zu werden, wie es bei Radialplatten oder Schaufeln häufig der Fall wäre.

Kurze Halmhalbschalen in der Anhäufung auf der Walzenreihe werden je nach Abstand zum Grundzylinder der Planetenwalze entweder durch die Planetenzylinder infolge der Zylinderform nach oben verdrängt oder in Richtung Grundwalze befördert. Dadurch wird nur ein Teil der angehäuften Halmhalbschalen mit geringerem Abstand zum Grundzylinder der rotierenden Planetenwalze nach unten befördert. Der Rest der Halmhalbschalen wird weiter in Walzenreihenförderrichtung bewegt.

Der Fachmann würde zum Befördern von Halmhalbschalen von dem Einsatz von Glattwalzen gänzlich absehen, weil diese mangels Oberflächenstruktur oder Oberflächenprofil keine Mitnehmerkontur oder Erhebung zum effektiven Befördern in Walzenreihenförderrichtung aufweisen. Halmhalbschalen können bei Verwendung von Glattwalzen nur durch Oberflächenreibung mit der Mandelfläche der Glattwalze in Drehrichtung der Glattwalze, also in Walzenreihenförderrichtung, bewegt werden. Lange Halmhalbschalen, die sich ähnlich wie Strohballen anhäufen und die Glattwalze lediglich mit spitzen Enden der Halmhalbschalen berühren, können durch Glattwalzen mangels ausreichender Reibkräfte nur wenig oder gar nicht weitertransportiert, also gefördert, werden.

Der Abstand zwischen zwei Planetenwalzen, der durch den Außendurchmesser der dazwischenliegenden Glattwalze bestimmt wird, kann jedoch durch die Förderwirkung der Planetenwalzen bei langen Halmhalbschalen überbrückt werden, indem die langen Halmhalbschalen durch die Zylinderform der Planetenzylinder nach oben bzw. schräg nach oben in Walzenreihenförderrichtung gedrückt werden, so dass diese in den Einflussbereich der nächsten Planetenwalze gelangen und so auch ohne eine Förderwirkung der dazwischenliegenden Glattwalze in Walzenreihenförderrichtung transportiert werden können. Dieser Effekt wird je nach Durchmesser der Glattwalze dadurch verstärkt, dass die auf der Walzenreihe angehäuften Halmhalbschalen auch untereinander und ineinander wie Heuballen miteinander mechanisch lose verbunden oder verhakt sind. Dadurch kann eine Druckbewegung durch eine Planetenwalze durch diese losen Zusammenhängen auf die angehäuften Halmhalbschalen übertragen werden, so dass auch Glattwalzen mit größerem Durchmesser gewissermaßen überbrückt werden können. Bei kurzen Halmhalbschalen genügt in der Regel die flächige Auflage auf der Glattwalze, um hinreichend Reibungskräfte für ein Fördern zu erzielen.

Somit können durch die Wahl des Durchmessers der Glattwalze die Abstände zwischen den Vertikaldurchlässen - also den Stellen, an denen Halmhalbschalen planmäßig nach unten befördert oder durchgelassen werden können - festgelegt werden und so ein besonders gleichmäßiges Verteilen auch kurzer Halmhalbschalen über die gesamte Länge der Walzenreihe in Walzenreihenförderrichtung erzielt werden.

Planetenzylinder haben bei langen Halmhalbschalen den weiteren Vorteil, dass bereits eine erste Querorientierung der Halmhalbschalen stattfinden kann, also quer zur Walzenreihenförderrichtung bzw. der Förderbandrichtung. Denn durch die Planetenzylinder werden schräg orientierte Halmhalbschalen infolge der Rundung sanft und kontinuierlich in die v-förmige Tasche reingeführt oder infolge der Rotation reingedrückt, die durch den Planetenzylinder und der Mantelfläche des Grundzylinders gebildet wird.

Auf diese Weise kann eine besonders effektive und homogene Streuung in Walzenreihenförderrichtung von sowohl kurzer als auch langer Halmhalbschalen durch dieselbe Fertigungsanlage ermöglicht werden.

Insbesondere haben die Glattwalze, der Grundzylinder und/oder die Planetenzylinder alle dieselbe Breite, insbesondere die gleiche Breite wie die gesamte Walzenreihenbreite. Mit Breite ist dabei nur der mit Halmhalbschalen in Berührung kommende Teil der Glattwalze, des Grundzylinder und des Planetenzylinders gemeint. Vorzugsweise hat der Grundzylinder die gleiche Form wie die Glattwalze, wobei der Außendurchmesser unterschiedlich sein kann. Insbesondere ist der Querschnitt einer Glattwalze und/oder Planetenzylinderwalze über die gesamte Walzenreihenbreite identisch und unverändert.

Bevorzugt bei dem Verfahren und/oder dem Streukopf sind mindestens vier, vorzugsweise sechs, besonders bevorzugt acht, und/oder höchstens vierzehn, vorzugsweise zwölf, besonders bevorzugt zehn Planetenzylinder vorgesehen und/oder die Planetenzylinder sind in gleichen Abständen über den Umfang des Grundzylinders der Planetenwalze verteilt, also in einem gleichen Winkelabstand zueinander mit Mantelfläche des Grundzylinders der Planetenwalze verbunden. Der Winkelabstand meint Winkeldifferenz bezogen auf die Förderwalzenachse.

Ein besonders effektives Fördern von kurzen und langen Halmhalbschalen sowie ein besonders homogenes und gleichmäßiges Verteilen über die Länge der Walzenreihe können so erzielt werden.

Bevorzugt bei dem Verfahren und/oder dem Streukopf ist, dass eine Glattwalze und eine Planetenwalze einen im Wesentlichen gleichen Außendurchmesser aufweisen und/oder ein Grundzylinder einer Planetenwalze verglichen mit Planetenzylindern der Planetenwalze einen mindestens dreimal, bevorzugt viermal, besonders bevorzugt viereinhalbmal so großen Durchmesser und/oder höchstens siebenmal, bevorzugt sechsmal, besonders bevorzugt fünfmal so großen Durchmesser aufweist. Vorzugsweise beträgt der Durchmesser der Glattwalze mindestens 80 mm, bevorzugt 100 mm, besonders bevorzugt 120 mm und/oder höchstens 170 mm, bevorzugt 150 mm, besonders bevorzugt 130 mm. Vorzugsweise beträgt der Durchmesser des Grundzylinders mindestens 75 mm, bevorzugt 80 mm, besonders bevorzugt 85 mm und/oder höchstens 110 mm, bevorzugt 100 mm, besonders bevorzugt 90 mm. Vorzugsweise beträgt der Durchmesser des Planetenzylinders mindestens 5 mm, bevorzugt 10 mm, besonders bevorzugt 15 mm und/oder höchstens 40 mm, bevorzugt 30 mm, besonders bevorzugt 20 mm.

Mit Außendurchmesser ist bei einer Planetenwalze der Wirkkreis gemeint, also in der Regel die Summe der Durchmesser des Grundzylinders und zwei Planetenzylindern. Im Wesentlichen gleicher Außendurchmesser erlaubt z.B. eine Abweichung von insgesamt 2%, bevorzugt 5%, besonders bevorzugt 10%.

Ein besonders effektives Fördern von kurzen und langen Halmhalbschalen sowie ein besonders homogenes und gleichmäßiges Verteilen über die Länge der Walzenreihe können so erzielt werden.

Bevorzugt bei dem Verfahren und/oder dem Streukopf ist, dass in einer Walzenreihe mindestens drei, vier oder fünf und/oder höchstens acht, sieben oder sechs unmittelbar hintereinander angeordnete Walzenpaare mit oder bestehend aus einer Glattwalze und einer Planetenwalze vorgesehen sind. Vorzugsweise sind abwechselnd angeordnet insgesamt genau fünf Glattwalzen und genau vier Planetenwalzen in einer Walzenreihe angeordnet.

Dadurch wird eine über die Länge der Walzenreihe besonders homogenes Verteilen bzw. Streuen langer und kurzer Halmhalbschalen ermöglicht.

Bevorzugt bei dem Verfahren und/oder dem Streukopf ist, dass zwei um eine Mittelebene des Streukopfs spiegelsymmetrisch angeordnete Walzenreihen vorgesehen sind, die Materialzuflusseinheit mittig oder spiegelsymmetrisch zur Mittelebene des Streukopfs angeordnet ist und/oder die Walzenreihenförderrichtung und die Drehrichtung der Förderwalzen von der Materialzuflusseinheit gesehen nach außen gerichtet sind.

Durch diese bevorzugten Weiterentwicklungen kann ein besonders hoher Materialdurchsatz der Herstellungsanlage ermöglicht werden. Die Halmhalbschalen können so als lose zusammenhängende Anhäufungen durch die Materialzuflusseinheit auf die beiden oberen Enden der beiden spiegelsymmetrischen Walzenreihen gelangen, wo die Förderwalzen links von der Mittelebene entgegen dem Uhrzeigersinn für eine nach links gerichtete Walzenreihenförderrichtung rotieren und die Förderwalzen rechts von der Mittelebene im Uhrzeigersinn für eine nach rechts gerichtete Walzenreihenförderrichtung rotieren. Mit zunehmender Länge der Walzenreihe nimmt die Schwierigkeit eines homogenen Streuens der Halmhalbschalen nach unten zu. Ein Aufteilen der Halmhalbschalen auf zwei Walzenreihen verdoppelt somit den Materialdurchfluss bei gleich hoher Streuqualität und einem hohen Anteil querorientierter Halmhalbschalen verglichen mit nur einer Walzenreihe.

Bevorzugt bei dem Verfahren und/oder dem Streukopf ist, dass die Walzenreihe unter einem spitzen Winkel angeordnet ist und/oder die Materialzuflusseinheit ein oberes Ende der Walzenreihe von oben überdeckt.

Spitzer Winkel meint ein Winkel kleiner 90°, bevorzugt kleiner 60°, besonders bevorzugt kleiner 45° relativ zu einer Horizontalen, die parallel zum Förderband orientiert ist.

Durch die Anordnung der Walzenreihe unter einem spitzen Winkel und/oder die Anordnung der Materialzuflusseinheit oberhalb des oberen Endes der Walzenreihe können die Halmhalbschalen besonders schnell über die gesamte Länge der Walzenreihe zum unteren Ende der Walzenreihe befördert werden und damit bei besonders großer Materialdurchsatz und Wirkungsgrad der Anlage erzielt werden.

Bevorzugt bei dem Verfahren und/oder dem Streukopf ist, dass als eine erste Förderwalze, insbesondere nur die erste Förderwalze, der Walzenreihe eine Igelwalze mit mindestens 1000 und/oder höchstens 1500 Radialstielen vorgesehen ist, wobei der Wirkkreis der Igelwalze mindestens 50% größer und/oder höchstens doppelt so groß wie der Wirkkreis oder Durchmesser der übrigen Förderwalzen, insbesondere Glattwalze oder Planetenwalze, ist und ein Anteil am Wirkkreis von mindestens 20 % und/oder höchstens 30 % den Radialstielen oder der Radialstiellänge zuzuordnen ist. Vorzugsweise sind die Radialstiele in mindestens 15 und/oder höchstens 25 gleichmäßig über dem Umfang der Zylinderwalze verteilten Reihen angeordnet, wobei in jeder parallel zur Förderwalzenachse orientierten Reihe mindestens im Abstand von mindestens 10 mm und/oder höchstens 30 mm ein Radialstiel auf der Zylinderwalze angeordnet ist. Vorzugsweise ist jeder Radialstiel fest und radial orientiert auf einer Mantelfläche der Zylinderwalze befestigt, insbesondere durch eine Schweißverbindung. Der Durchmesser eines Radialstiels kann mindestens 5 mm, bevorzugt 7 mm, und/oder höchstens 11 mm, bevorzugt 9 mm, betragen. Eine erste Förderwalze ist die erste Förderwalze in der Walzenreihe an einem Ende oder dem oberen Ende, welches der Materialzuflusseinheit zugewandt ist.

Durch das Vorsehen einer Igelwalze mit einer solchen Vielzahl dicht angeordneter, kurzer Radialstiele auf einer Zylinderwalze mit einem größeren Durchmesser als die übrigen Förderwalzen der Walzenreihe kann ein besonders effektives Auftrennen der lose zusammenhängenden Anhäufungen der Halmhalbschalen erfolgen, die von der Materialzuflusseinheit auf die Igelwalze hinabfallen. Bei weniger oder längeren Radialstielen würden die Anhäufungen wenig effektiv aufgetrennt und eine homogene Verteilung über die gesamte Länge der Walzenreihe würde erschwert. Bei mehr Radialstielen bestünde die Gefahr, das sowohl kurze wie auch lange Halmhalbschalen sich zwischen den Radialstielen festsetzen würden.

Bevorzugt bei dem Verfahren und/oder dem Streukopf ist, dass die Walzenreihe oder Walzenreihen durch eine - insbesondere nur eine - Schaufelräderreihe mit unmittelbar aneinander angrenzenden Schaufelrädern unterdeckt werden, die vorzugsweise horizontal ausgerichtet ist, wobei die insbesondere neun vorzugsweise baugleichen Schaufelräder vorzugsweise mindestens fünfzehn und/oder höchstens zwanzig sich parallel zu einer Schaufelradachse erstreckenden Quertaschen umfassen, die jeweils durch zwei V-förmige Schaufeln und einem Teil einer Mantelfläche einer Zylinderwalze gebildet werden, wobei jede Schaufel mit einer offenen Seite der V-förmigen Schaufel in Drehrichtung orientiert ist und mit einem Ende unter einem spitzen Winkel vorzugsweise von mindestens 60° und/oder höchstens 90° mit der Mantelfläche der Zylinderwalze verbunden ist, insbesondere durch eine Schweißverbindung. Insbesondere bildet die V-förmige Schaufel zum Wirkkreis oder zu einer Tangentialen am Umfang des Wirkkreises ebenfalls einen spitzen Winkel von mindestens 45° und/oder höchstens 60° aus. Insbesondere ist bei den - vorzugsweise sämtlichen - Schaufelrädern nur eine einheitliche Drehrichtung und/oder eine Drehrichtung vorzugsweise entgegen der Förderbandrichtung, also entgegen dem Uhrzeigersinn, vorgesehen. Unterdeckt meint, dass in der Draufsicht die Walzenreihe oder Walzenreihen komplett von der Schaufelräderreihe umschlossen sind.

Durch eine Schaufelräderreihe mit aneinander angrenzenden Schaufelrädern mit Taschen aus in Drehrichtung orientierten, V-förmigen Schaufeln, welche die Walzenreihe oder Walzenreihen unterdecken, kann ein besonders hoher Anteil an querorientierten Halmhalbschalen in einem Paneel erzielt werden. Denn die herabfallenden Halmhalbschalen werden durch die rotierenden V-förmigen Schaufeln erfasst und durch die Zentrifugalkraft in die sich quer erstreckenden Quertaschen bewegt. Dabei erfolgt automatisch eine Anpassung der Orientierung der Halmhalbschalen in die Ausrichtung der Quertaschen in Querrichtung zur Förderbandrichtung. Durch das unmittelbare aneinander angrenzen der Schaufelräder kann erzielt werden, dass die Halmhalbschalen in der Regel innerhalb der Quertaschen von der Oberseite der Schaufelräderreihe nach unten auf das Förderband transportiert werden. Nur ein geringer Teil wird durch den Schließspalt zwischen zwei Wirkkreisen von benachbarten Schaufelrädern gequetscht. Vielmehr verbleiben vor allem lange Halmhalbschalen mit Längsorientierung zunächst auf der Schaufelräderreihe und bewegen sich willkürlich, bis eine veränderte Orientierung ein Erfassen durch die Schaufelräder ermöglicht. Die Schaufelräderreihe sorgt nicht nur für eine Querausrichtung der Halmhalbschalen, sondern trägt auch zu einer homogenen Verteilung der Halmhalbschalen auf das Förderband über die Länge der Schaufelräderreihe bei, indem durch die rotierenden Schaufelräder Bereiche mit erhöhter Ansammlungsdichte der Halmhalbschalen über die Länge der Schaufelräderreihe ausgeglichen werden können.

Bevorzugt wird bei dem Verfahren eine Oberfläche des - insbesondere rohe - Paneels abgetragen und/oder beschichtet. Es ist also ein Beschichten des insbesondere rohen Paneels für ein Erzielen eines besonders geringen Herstellungsaufwandes möglich oder ein Beschichten nach einem Abtragen mindestens einer der beiden Oberflächen des Paneels für ein Erzielen einer besonders hochwertigen Oberfläche. Vorzugsweise werden genau beide gegenüberliegenden, flächigen Oberflächen abgetragen und/oder beschichtet.

Insbesondere werden höchstens 2 mm abgetragen. Ein Abtragen kann vorteilhaft durch Abschleifen oder Schleifen (engl., "sanding" or "grinding") zur Erzielung einer hohen Genauigkeit und Produktionseffizienz erfolgen. Ein Abtragen kann auch durch Hobeln oder Schälen zur Erzielung eines geringen und glatten Abtrags erfolgen. Ein Abtragen kann vorteilhaft durch Sandstrahlen zur Erzielung einer matten Oberfläche erfolgen. Ein Abtragen kann vorteilhaft durch Stampfen oder Pressen zur Erzielung einer glatten, dichten Oberfläche erfolgen. Ein Abtragen kann vorteilhaft durch chemische Verfahren oder Ätzen zur Erzielung einer strukturierten Oberfläche erfolgen.

Ein Beschichten kann vorteilhaft erzeugt werden durch Lackieren oder Auftragen eines feuerhemmenden Mittels oder einer feuerhemmenden Farbe zur Erzielung einer sehr widerstandsfähigen Schicht und zum Einsparen eines zusätzlichen Färbungsschrittes. Ein Beschichten kann ebenfalls vorteilhaft erzeugt werden durch Aufbringen einer ein- oder mehrlagigen UV (Ultra-Violett) vulkanisierenden und/oder UV aushärtenden Beschichtung (engl. ultra violet curable coating) zur Erzielung einer besonders dünnen, widerstandsfähigen und wasserabweisenden Schicht. Beispielsweise kann dazu das UV Beschichtungsmittel von der Firma Treffert Coatings GmbH benutzt werden. Vorzugsweise kann erst ein Bedrucken mit Farbpigmenten zur Vermeidung von Blendeffekten und danach ein Auftragen oder Bedrucken mit dem UV Beschichtungsmittel erfolgen, um die Farbpigmente besonders wirkungsvoll vor Umgebungseinflüssen zu schützen.

Ein Beschichten kann auch vorteilhaft erzeugt werden durch Auftragen einer Folie oder Gießfolie (engl. "cast film") zur Erzielung einer besonders dünnen und dichten Beschichtung, vorzugsweise aus Polypropylen (PP), beispielsweise von der Firma Daikin PPA. Ein Beschichten kann vorteilhaft erzeugt werden durch Aufbringen mindestens eines Phenolharz-Papiers (engl. "phenolic paper"), also ein mit Phenolharz versehenes Papier oder Hartpapier, zum Beispiel zur vorteilhaften Verwendung für eine Betonschalung.

Ein Beschichten kann vorteilhaft durch Aufbringen einer Decklage aus Furnier, MDF oder Dünnspanplatte mit dem Aufbau einer Tischlerplatte (engl. "Block Board") zur Herstellung einer Tischlerplatte auf Strohbasis mit den eingangs beschriebenen Vorteilen erfolgen.
Ein Beschichten kann vorteilhaft durch Aufbringen eines Furniers (engl. "veneer"), einer Korkschicht, einer MDF-Platte oder einer Laminierung erfolgen. Ein Beschichten kann auch mit Mitteln zur Erzeugung einer Formplatte für Gussteile (engl. "Mold plate finish") erfolgen.

Ein Beschichten kann vorteilhaft durch Aufbringen eines Furnier (engl. "veneer"), einer Laminierung (engl. "laminate") und einer insbesondere transparenten Overlay- oder Verkleidungsschicht (engl. "overlay"), vorzugsweise in der genannten Reihenfolge, erfolgen. Ein besonders robustes und hochwertiges Paneel kann so erzeugt werden.

Ein Beschichten kann vorteilhaft erfolgen durch Auftragen mindestens eines Melamin-Papiers (engl. "melamine-faced lamination paper") insbesondere an beiden Oberflächen und zu oberst eine insbesondere transparente Overlay- oder Verkleidungsschicht, vorzugsweise in genau der genannten Reihenfolge. Ein besonders robustes und hochwertiges Paneel, ein sogenanntes "melamine faced panel", kann so erzeugt werden.

Bevorzugt werden bei dem Verfahren unmittelbar auf eine oder beide unbehandelte Oberflächen des rohen Paneels nur eine oder mindestens eine, vorzugsweise zwei, besonders bevorzugt drei Schichten Kraftpapier aufgebracht und durch Heizpressen insbesondere bei Temperaturen von mindestens 100°C, bevorzugt 150°C, besonders bevorzugt 180°C und/oder höchstens bis 250°C, bevorzugt 220°C, mit der Oberfläche verbunden.

Mit Oberfläche eines Paneels ist eine flächige Seite eines Paneels gemeint, die sich im Stadium einer Streugutmatte parallel zum Förderband erstreckte. Mit Oberfläche sind also nicht die Seitenränder gemeint.

Durch das Verbinden eines Kraftpapiers auf eine unmittelbar unbehandelte Oberfläche des rohen Paneels wird ermöglicht, ein weiterverarbeitetes Paneel zur Verwendung als z.B. Fußbodenbelag - durch den Wegfall einer sonst benötigten Zwischenschicht - mit besonders geringem Herstellungsaufwand bereitzustellen, welches eine besonders geringe Anfälligkeit für Verformungen hat.

Bevorzugt ist Kraftpapier ein auf Zellstofffasern basiertes hoch festes Papier insbesondere mit einem Gewicht von mindestens 80 g/m², bevorzugt 100 g/m², besonders bevorzugt 110 g/m² und/oder höchstens 150 g/m², bevorzugt 140 g/m², besonders bevorzugt 130 g/m² oder genau 120 g/m². Bevorzugt ist Kraftpapier insbesondere melamingetränkt und/oder phenolharzgetränkt, um ein zuverlässiges Verbinden durch Heizpressen insbesondere bei Temperaturen von 100°C bis 250°C zu ermöglichen. Insbesondere ist das Kraftpapier mit Farbpigmenten bedruckbar oder mit Farbpigmenten bedruckt, um durch verbesserte Lichtabsorption Blendeffekte zu vermeiden.

Bevorzugt werden bei dem Verfahren eine oder beide Oberflächen des rohen Paneels um jeweils mindestens 0,1 mm, bevorzugt 0,4 mm, besonders bevorzugt 0,8 mm und/oder höchstens 2 mm, bevorzugt 1,5 mm, besonders bevorzugt 1 mm abgeschliffen und unmittelbar auf eine abgeschliffene Oberfläche nur eine oder mindestens eine, vorzugsweise zwei, besonders bevorzugt drei Schichten Kraftpapier aufgebracht und durch Heizpressen insbesondere bei Temperaturen von 100 °C bis 250°C mit der Oberfläche verbunden.

Mit Schleifen oder abgeschliffen ist insbesondere ein Bearbeitungsverfahren zum Glätten einer Oberfläche aus Holz- oder Halmgewächsfasern gemeint (englisch "sanding"), wobei in der Regel ein Papier oder Stoff als Träger von abrasivem Material wie Schleifkörner dient.

Durch eine nur geringfügig abgeschliffene Oberfläche, die unmittelbar nach dem Abschleifen mit einem Kraftpapier versehen werden kann, wird ermöglicht, ein weiterverarbeitetes Paneel zur Verwendung als z.B. Fußbodenbelag - durch den Wegfall einer sonst benötigten Zwischenschicht - mit besonders geringem Herstellungsaufwand bereitzustellen, welches eine besonders geringe Anfälligkeit für Verformungen hat.

Ein weiterer Aspekt der Offenbarung betrifft die Verwendung des Streukopfes zum Streuen von Stroh und/oder Reed auf ein Förderband zur Herstellung eines Paneels, insbesondere eines Paneels mit ausschließlich Stroh und/oder Reet als Faserwerkstoff und/oder für mechanisch lasttragende Zwecke im Umfang des Einsatzgebietes von OSB/1-, OSB/2, OSB/3, P3, P5 und/oder P7-Platten.

Ein weiterer Aspekt der Offenbarung betrifft ein Verfahren zur Herstellung eines Paneels, wobei zunächst Halme eines oder mehrerer Halmgewächse wie Stroh und/oder Reet vorzugsweise gekürzt und überwiegend oder zu einem Anteil von über 80% in Halmlängsrichtung gespalten werden, um längliche, näherungsweise halbschalenförmige Halmhalbschalen zu erhalten, die dann mit Bindemittel versehen werden und mit einem Außenschichtstreukopf auf ein in Förderbandrichtung laufendes Förderband gestreut werden, um dort eine Streugutmatte oder eine Schicht einer Streugutmatte aus den Halmhalbschalen anzuhäufen, die anschließend unter Hitzeeinwirkung verpresst wird, um ein rohes Paneel zur Verwendung als Bauplatte zu erhalten oder ein weiterverarbeitetes Paneel beispielsweise zur Verwendung als Fußbodenbelag oder zur Herstellung von Möbeln zu erzeugen, wobei die Halmhalbschalen durch eine Materialzuflusseinheit des Außenschichtstreukopfes von oben mittig auf eine pyramidenförmige Anordnung mehrerer übereinander angeordneter Reihen von Spindeln zugeführt werden, wobei die Spindeln jeweils eine Welle quer zur Längsrichtung des Förderbands umfassen, an der eine Vielzahl von Scheiben koaxial zur Welle und mit einem Abstand zueinander fest angebracht sind, wobei die Halmhalbschalen über die rotierenden Scheiben an einer Oberseite einer Reihe von Spindeln in einer gemeinsamen Einheitsspindelförderrichtung parallel zum Förderband befördert werden und sich zwischen den Scheiben zweier benachbarter Spindeln eine Vertikaldurchlassöffnungsfläche zum Durchlassen eines Teils der Halmhalbschalen nach unten eröffnet, wobei zumindest bei einigen Paaren zweier benachbarter Spindeln die Scheiben zur Verringerung der Vertikaldurchlassöffnungsfläche gegenseitig überlappen und ineinander greifen, wobei sämtliche Spindeln des Außenschichtstreukopfes unterhalb der Materialzuflusseinheit in nur eine einzige, gemeinsame Einheitsspindeldrehrichtung rotieren, um die Halmhalbschalen - oder besser gesagt die Halmhalbschalen, die zwischen zwei Spindeln nicht durch die Vertikaldurchlassöffnungsfläche nach unten befördert wurden, sondern an der Oberseite der Reihe von Spindeln verblieben sind - in nur eine einzige, gemeinsame Einheitsspindelförderrichtung zu bewegen, wobei lediglich eine Gegenwurfspindel am Ende einer Reihe von Spindeln zum Rückbefördern von sonst außen - also über das äußere Ende der Reihe - hinabfallenden Halmhalbschalen von der Einheitsspindeldrehrichtung abweichen kann.

Ein weiterer Aspekt der Offenbarung betrifft einen Außenschichtstreukopf - insbesondere zur Durchführung des zuletzt beschriebenen Verfahrens - zum Streuen von länglichen Halmhalbschalen aus einem Halmgewächs auf ein Förderband zur Herstellung eines Paneels mit einer Materialzuflusseinheit und mindestens einer Reihe hintereinander angeordneter Spindeln, wobei mehrere Reihen von Spindeln pyramidenförmig übereinander und mittig unter der Materialzuflusseinheit angeordnet sind und nur eine einzige, gemeinsame Einheitsspindeldrehrichtung sämtlicher Spindeln des Außenschichtstreukopfes vorgesehen ist.

Durch die pyramidenförmige Anordnung mehrerer übereinander angeordneter Reihen von Spindeln mittig unter der Materialzuflusseinheit mit nur einer Einheitsspindeldrehrichtung sämtliche Spindeln insbesondere zum Befördern der Halmhalbschalen in nur eine Einheitsspindelförderrichtung können mit demselben Außenschichtstreukopf Paneelen mit unterschiedlichen Längengefällen der Halmhalbschalen über den Querschnitt einer Außenschicht besonders flexibel und mit geringem Herstellungsaufwand hergestellt werden.

Insbesondere ist der Außenschichtstreukopf ein Außenschichtstreukopf zum Streuen von länglichen, näherungsweise halbschalenförmigen, mit Bindemittel versehenen Halmhalbschalen auf ein in Förderbandrichtung laufendes Förderband zur Herstellung eines rohen Paneels zur Verwendung als Bauplatte oder ein weiterverarbeitetes Paneel beispielsweise zur Verwendung als Fußbodenbelag oder zur Herstellung von Möbeln, wobei Halme eines oder mehrerer Halmgewächse wie Stroh und/oder Reet zum Erzeugen der Halmhalbschalen vorzugsweise gekürzt und überwiegend oder zu einem Anteil von über 80% in Halmlängsrichtung gespalten wurden, gekennzeichnet durch eine Materialzuflusseinheit und eine pyramidenförmige Anordnung mehrerer übereinander angeordneter Reihen von Spindeln, die so beschaffen sind, dass die Halmhalbschalen über rotierende Scheiben an einer Oberseite einer Reihe von Spindeln in einer gemeinsamen Einheitsspindelförderrichtung parallel zum Förderband befördert werden können und sich zwischen den Scheiben zweier benachbarter Spindeln eine Vertikaldurchlassöffnungsfläche zum Durchlassen eines Teils der Halmhalbschalen nach unten eröffnet, wobei zumindest bei einigen Paaren zweier benachbarter Spindeln die Scheiben zur Verringerung der Vertikaldurchlassöffnungsfläche gegenseitig überlappen und ineinander greifen, wobei nur eine einzige, gemeinsame Einheitsspindeldrehrichtung sämtlicher Spindeln des Außenschichtstreukopfes unterhalb der Materialzuflusseinheit vorgesehen ist, um die Halmhalbschalen in nur eine einzige, gemeinsame Einheitsspindelförderrichtung zu bewegen.

Einheitsspindeldrehrichtung bedeutet, dass lediglich bei einer Gegenwurfspindel am Ende einer Reihe von Spindeln zum Rückbefördern von sonst seitlich hinabfallenden Halmhalbschalen eine von der Einheitsspindeldrehrichtung abweichende Drehrichtung vorgesehen werden kann. Ansonsten unterliegen sämtliche Spindeln unterhalb der Materialzuflusseinheit, die zum Fördern von Halmhalbschalen vorgesehen sind, der Einheitsspindeldrehrichtung.

Pyramidenförmige Anordnung mehrerer übereinander angeordneter Reihen von Spindeln meint grundsätzlich, dass sämtliche Reihen von Spindeln spiegelsymmetrisch zu einer Mittelebene der pyramidenförmigen Anordnung aufgebaut sind und sich die Länge der Reihen von Spindeln in Längsrichtung parallel zum Förderband von oben nach unten vergrößert, so dass eine Reihe von Spindeln stets von der unmittelbar darunter angeordneten Reihe von Spindeln unterdeckt wird. Von oben mittig auf eine pyramidenförmige Anordnung zuführen meint, dass die Halmhalbschalen in Längsrichtung mittig, also näherungsweise zentriert zur Mittelebene, auf die obersten Reihe von Spindeln befördert werden oder fallen. Insbesondere ist die Erstreckung der Materialzuflusseinheit in Längsrichtung daher geringer als die oberste Reihe von Spindeln.

Der Fachmann würde bei einer pyramidenförmigen Anordnung mehrerer übereinander angeordneter Reihen von Spindeln keine Einheitsspindeldrehrichtung sämtliche Spindeln zum Befördern der Halmhalbschalen in nur eine Einheitsspindelförderrichtung vorsehen, weil dadurch nur eine Hälfte der pyramidenförmigen Anordnung bzw. nur die Hälfte der Spindeln mit Halmhalbschalen überhaupt in Berührung kommt und ungenutzt bleibt.

Diesem Aspekt der Offenbarung liegt jedoch der Gedanke zugrunde, dass der zusätzliche Investitions- und Instandhaltungsaufwand für das Vorsehen der doppelten Anzahl von Spindeln wie zum Streuen und Verteilen der Halmhalbschalen auf das Förderband eigentlich benötigt - weil die Hälfte der Spindeln mit den Halmhalbschalen gar nicht in Berührung kommt - durch die Einsparungen überkompensiert werden können, die dadurch entstehen können, dass durch diese Anordnung die Möglichkeit für ein Entfallen eines aufwändigen Umrüstens bei Umstellung der Produktion auf ein anderen Paneeltyp mit unterschiedlich beschaffener Außenschicht geschaffen werden kann.

Durch das in Längsrichtung symmetrische Anordnen der Spindeln wird ermöglicht, dass auch bei einer Umkehr der Einheitsspindeldrehrichtung verschiedene Paneeltypen mit demselben Außenschichtstreukopf hergestellt werden können. Ferner kann vermieden werden, dass bei unterschiedlichen Rotationsrichtungen von Spindeln die Halmhalbschalen auf einem nur sehr geringen Längsbereich und mit keiner oder nur sehr geringer Orientierung auf das Förderband fallen.

Bevorzugt bei dem Verfahren und/oder dem Außenschichtstreukopf ist, dass der Außenschichtstreukopf eine Steuerung zum Umkehren der Einheitsspindeldrehrichtung umfasst, um die gemeinsame Einheitsspindelförderrichtung in die entgegengesetzte Richtung umzukehren. Das Förderband kann sich ausschließlich in nur eine Förderbandrichtung bewegen. Eine Umkehr der Bewegungsrichtung des Förderbands ist nicht möglich oder nicht vorgesehen. Bei Umkehren der Einheitsspindeldrehrichtung - was in der Regel durch den Benutzer gewissermaßen auf Knopfdruck an der Steuerung aktiviert oder eingestellt werden kann - drehen sich sämtliche Spindeln des Außenschichtstreukopfes unterhalb der Materialzuflusseinheit - auch eine Gegenwurfspindel - in die genau entgegengesetzte Rotationsrichtung.

Durch das Vorsehen einer Steuerung für nur ein Umkehren der Einheitsspindeldrehrichtung kann ein besonders einfacher Aufbau und Bedienbarkeit der Steuerung und des Außenschichtstreukopfes ermöglicht werden. Durch das Umschalten der Einheitsspindeldrehrichtung und damit der Einheitsspindelförderrichtung ermöglicht, dass mit demselben Außenschichtstreukopf mindestens zwei verschiedene Paneeltypen ohne einen Umbau oder ein aufwendiges Umrüsten des Außenschichtstreukopfes oder der gesamten Fertigungsanlage hergestellt werden können, wobei die verschiedenen Paneeltypen unterschiedliche Produkteigenschaften wie etwa Oberflächenbeschaffenheit, Längenverteilung der Halmhalbschalen über dem Querschnitt sowie mechanische und physikalische Eigenschaften aufweisen. Es ist ferner ermöglich durch Anordnen eines Streukopfes und eines weiteren Außenschichtstreukopfs entlang demselben Förderband noch eine größere Anzahl verschiedener Paneeltypen herstellen zu können, wobei dann der Außenschichtstreukopf lediglich einen Teil der Streugutmatte bzw. eine Schicht Halmhalbschalen der Streugutmatte und damit des späteren Paneels erzeugt.

Insbesondere sehen das Verfahren und der Außenschichtstreukopf nur zwei Einheitsspindeldrehrichtungen für alle Spindeln des Außenschichtstreukopfes - in der Regel mit Ausnahme der Gegenwurfspindel - vor, d.h. alle Spindeln können entweder nur in die gleiche eine Einheitsspindeldrehrichtung drehen oder in eine entgegengesetzte Einheitsspindeldrehrichtung.

Bevorzugt bei dem Verfahren und/oder dem Außenschichtstreukopf ist, dass die Scheiben oder einige der Scheiben aus einem nicht-eisenhaltigem Werkstoff, wie Aluminium oder Kunststoff hergestellt sind. Die Herstellungskosten für den Außenschichtstreukopf können so reduziert werden und das Gewicht des Außenschichtstreukopfes halbiert oder zumindest deutlich reduziert werden. Dies ermöglicht wiederum das Anordnen von mehr Reihen von Spindeln und/oder mehr Spindeln pro Reihe ohne das Vorsehen einer stärker dimensionierten und somit teureren Stützstruktur und Aufhängung des Außenschichtstreukopfes. Ferner kann bei sehr langen Halmhalbschalen im Längenbereich von bis zu 150 mm und darüber durch die Verwendung von Scheiben aus einem nichteisenhaltigen Werkstoff ein besonders geringer Instandhaltungsaufwand erzielt werden.

Bevorzugt bei dem Verfahren und/oder dem Außenschichtstreukopf ist, dass die Spindeln in mindestens zwei oder genau drei im Wesentlichen horizontalen Reihen übereinander angeordnet sind.

Durch mindestens zwei oder genau drei im Wesentlichen horizontal und übereinander angeordneten Reihen von Spindeln können die Halmhalbschalen über einen besonders großen Längsbereich mit besonders differenzierter Längenverteilung und Orientierung der Halmhalbschalen über den Längsbereich auf das Förderband verteilt werden. Dies gilt besonders für sehr lange Halmhalbschalen im Längenbereich von bis zu 120 mm und darüber.

Bevorzugt bei dem Verfahren und/oder dem Außenschichtstreukopf ist, dass in einer Ebene Spindeln sämtliche Spindeln unmittelbar aneinander angrenzend oder überlappend angeordnet sind. Eine Ebene Spindeln meint eine Höhenebene näherungsweise parallel zum Förderband. Es werden also nicht z.B. zwei voneinander beabstandete Reihen von Spindeln in derselben Ebene vorgesehen, sondern stets nur eine Reihe von Spindeln pro Ebene. Dadurch kann eine besonders effiziente Verteilung ermöglicht werden.

Bevorzugt bei dem Verfahren und/oder dem Außenschichtstreukopf sind, dass die Anzahl der Spindeln der obersten oder sämtlicher Reihen ungerade sind.

Durch eine ungerade Anzahl von Spindeln in einer Reihe kann bewirkt werden, dass bei Umkehr der Einheitsspindeldrehrichtung die Halmhalbschalen beim Auftreffen auf die Spindel besonders effizient zu jeweils einer Seite in Längsrichtung umgelenkt werden, um von den in dieser Richtung angeordneten Spindeln orientiert und verteilt zu werden.

Bevorzugt bei dem Verfahren und/oder dem Außenschichtstreukopf ist, dass in einer obersten Reihe von Spindeln fingerförmige Scheiben vorgesehen sind und/oder in einer unteren oder den restlichen Reihen flächige Scheiben vorgesehen sind.

Durch fingerförmige Scheiben in der obersten Reihe können die zumeist zusammenhängenden Halmhalbschalen besonders effektiv aufgelockert, in Querrichtung verteilt, bereits grob in Längsrichtung orientiert, umgelegt und auf einen besonders großen Längsbereich auf eine darunter angeordnete Reihe von Spindeln verteilt werden. Dies gilt besonders für sehr lange Halmhalbschalen im Längenbereich von bis zu 120 mm und darüber.

Durch flächige Scheiben in einer oder mehreren unteren Reihen kann besonders einfach eine Orientierung der Halmhalbschalen in Längsrichtung sowohl bei kurzen als auch sehr langen Halmhalbschalen ermöglicht werden.

Optional können auf dem Umfang einer flächigen Scheibe Ausnehmungen, insbesondere Nuten, eingebracht sein oder eckige Scheiben, insbesondere hexagonale oder oktogonale, eingesetzt werden. Durch solche Schiebenformen können Halmhalbschalen besonders effektiv in Einheitsspindelförderrichtung transportiert werden und über einen besonders großen Längsbereich verteilt werden.

Optional kann eine zusätzliche Gegenwurfspindel an einem Ende einer Reihe von Spindeln angeordnet sein, vorzugsweise nach oberhalb und/oder überlappend mit der Reihe von Spindeln, wobei die Gegenwurfspindel in der Draufsicht mit einer oder zwei Spindeln in Längsrichtung auch überlappen kann, z.B. indem die Gegenwurfspindel oberhalb oder überlappend zwischen der letzten und vorletzten Spindel einer Reihe angeordnet ist.

Durch die Gegenwurfspindel kann vermieden werden, dass Halmhalbschalen am Ende einer Reihe von Spindeln in Einheitsspindelförderrichtung einfach auf das Förderband fallen, also als Ansammlungen zusammenhängender Halmhalbschalen, und dadurch Inhomogenitäten in der Streugutmatte verursachen, die zu großen Dichteverteilung im späteren Paneel führen. Die Gegenwurfspindel wirft gewissermaßen die am Ende der Reihe der Spindeln ankommenden Halmhalbschalen durch Rotation - ausnahmsweise - entgegen der Einheitsspindeldrehrichtung zurück zu den Spindeln, wo die zurückgeworfenen Halmhalbschalen dann wie gewohnt durch die Vertikaldurchlassfläche nach unten verteilt werden.

Bevorzugt bei dem Verfahren und/oder dem Außenschichtstreukopf ist, dass die Spindeln des Außenschichtstreukopfes mindestens zwei unterschiedliche Scheibenabstände entlang der Welle aufweisen.

Durch das Vorsehen unterschiedlicher Scheibenabstände und damit unterschiedlicher Spaltweiten zwischen den überlappenden Scheiben zweier benachbarter Spindeln kann eine Längenverteilung der Halmhalbschalen über den Längsbereich gezielt beeinflusst und zudem größere, unerwünschte Fremdkörper ausgesondert werden. Ein vorgelagerter, separater Arbeitsgang zum Sieben oder Filtern der Halmhalbschalen nach Partikellängen zur Erzielung einer bestimmten Längenverteilung über den Längsbereich und damit über den Querschnitt der Matte kann so eingespart werden. Ebenso kann auf einen vorgelagerten, separaten Aussonderungsschritt von übergroßen Partikeln verzichtet werden. Schließlich können durch das Vorsehen mindestens zwei unterschiedliche Scheibenabstände anstelle von unterschiedlich geformten Scheiben zur Erzielung derselben Wirkungen überwiegend baugleiche Scheiben eingesetzt werden und damit ein Außenschichtstreukopf mit besonders geringem Herstellungsaufwand bereitgestellt werden.

Bevorzugt bei dem Verfahren und/oder dem Außenschichtstreukopf ist, dass ein geringer Scheibenabstand bei mittig angeordneten Spindeln vorgesehen ist, also in einem um die Mittelebene zentriert angeordneten Bereich von Spindeln, und/oder die Anzahl solcher mittigen Spindeln mit geringerem Scheibenabstand sich von der obersten Reihe von Spindeln zur untersten Reihe von Spindeln vergrößert, also die mittigen Spindeln mit geringeren Scheibenabstand eine pyramidenförmige Anordnung bilden.

Durch das Vorsehen eines geringen Scheibenabstandes bei mittig angeordneten Spindeln und/oder einem pyramidenförmigen Anordnen solcher mittigen Spindeln mit geringerem Scheibenabstand kann besonders einfach ein Siebeffekt ermöglicht werden, bei dem tendenziell oder überwiegend kurze Halmhalbschalen mittig und lange Halmhalbschalen tendenziell oder überwiegend außen am Außenschichtstreukopf auf das Förderband fallen.

Die Halmhalbschalen werden durch die Materialzuflusseinheit von oben mittig auf oberste Reihe von Spindeln zugeführt, wo insbesondere fingerförmige Scheiben für ein Auftrennen zusammenhängender loser Ansammlungen ähnlich Heuballen von Halmhalbschalen sorgen und diese gleichzeitig durch Rotation in die Einheitsspindeldrehrichtung in Einheitsspindelförderrichtung befördern, wobei besonders kurze Halmhalbschalen durch die fingerförmigen Scheiben nach unten auf die darunterliegende Reihe von Spindeln fallen. In dieser zweiten Reihe von Spindeln sorgen die mittig angeordneten Spindeln mit geringem Scheibenabstand für ein Anhäufen und Weitertransportieren auch kurzer Halmhalbschalen in Einheitsspindelförderrichtung durch Rotation in die Einheitsspindeldrehrichtung. Nur ein geringer Teil der besonders kurzen Halmhalbschalen gelangt durch die mittigen Spindeln, auf die sie von oben draufgefallen sind, direkt weiter nach unten Richtung Förderband. Die meisten Halmhalbschalen und besonders die längen werden zunächst nach dem Auftreffen auf die Reihe von Spindeln in Richtung der Einheitsspindelförderrichtung befördert, wobei im Bereich der mittigen Spindeln mit geringem Scheibenabstand vornehmlich kurze Halmhalbschalen und lange Halmhalbschalen erst bei äußeren Spindeln mit großen Scheibenabstand durch die Vertikaldurchlassfläche nach unten gelangen.

Auf diese Weise werden die durch die Materialzuflusseinheit auf die Spindeln beförderten lose zusammenhängenden angehäuften Halmhalbschalen sukzessive voneinander gelöst, und über die gesamte, halbe Breite des Außenschichtstreukopfes von der Mittelebene zum äußersten Ende einer längsten, untersten Reihe von Spindeln auf das Förderband verteilt und gestreut, wobei die Länge der auf das Förderband fallenden Halmhalbschalen von der Mitte nach außen kontinuierlich zunimmt, also in der Mitte kurze Halmhalbschalen und außen lange Halmhalbschalen auf das Förderband gestreut werden.

Durch die konstante Bewegung des Förderbands in Förderbandrichtung wird so bei einer Einheitsspindeldrehrichtung entgegen dem Uhrzeigersinn, also einer Einheitsspindelförderrichtung entgegen der Laufrichtung des Förderbands, zunächst lange Halmhalbschalen und darauf immer kürzer werdende Halmhalbschalen gestreut. Eine Streugutmatte und ein späteres Paneel oder eine Paneelschicht mit einem Längengefälle über dem Querschnitt von langen Halmhalbschalen unten und immer kürzer werdenden Halmhalbschalen nach oben hin kann so erzeugt werden.

Analog dazu wird bei Umkehr der Einheitsspindeldrehrichtung, also einer Einheitsspindeldrehrichtung im Uhrzeigersinn und einer Einheitsspindelförderrichtung nach rechts in Förderbandrichtung, bei konstanter Bewegung des Förderbands - in die immer gleiche Förderbandrichtung nach rechts - zunächst kurze Halmhalbschalen und darauf immer länger werdende Halmhalbschalen gestreut. Eine Streugutmatte und ein späteres Paneel oder eine Paneelschicht mit einem Längengefälle über dem Querschnitt von kurzen Halmhalbschalen unten und immer länger werdenden Halmhalbschalen nach oben hin kann so erzeugt werden.

Vorzugsweise besteht eine Reihe oder sämtliche Reihen von Spindeln aus unmittelbar aneinander angrenzenden und/oder überlappenden Spindeln. Ein besonders homogenes Verteilen kann so erzielt werden.

Insbesondere weisen in der einen Reihe höchstens fünf, bevorzugt vier, besonders bevorzugt drei mittig angeordnete Spindeln einen geringen Scheibenabstand auf und/oder in der darunter angeordneten Reihe vorzugsweise mindestens sieben, bevorzugt mindestens neun, besonders bevorzugt mindestens elf mittig angeordnete Spindeln einen geringen Scheibenabstand.

Insbesondere ist der Scheibenabstand bei mittig angeordneten Spindeln mindestens 10 mm, bevorzugt 15 mm, besonders bevorzugt 18 mm, und/oder höchstens 30 mm, bevorzugt 25 mm, besonders bevorzugt 22 mm.

Insbesondere ist ein großer Scheibenabstand bei außen angeordneten Spindeln vorgesehen, vorzugsweise ein Scheibenabstand von mindestens 30 mm, bevorzugt 35 mm, besonders bevorzugt 40 mm, und/oder höchstens 55 mm, bevorzugt 50 mm, besonders bevorzugt 45 mm.

Insbesondere haben flächige Scheiben einen Durchmesser von mindestens 200 mm, bevorzugt 300 mm, besonders bevorzugt 350 mm, und/oder höchstens 600 mm, bevorzugt 500 mm, besonders bevorzugt 450 mm.

Ein weiterer Aspekt der Offenbarung betrifft die Verwendung des Außenschichtstreukopfes zum Streuen von Stroh und/oder Reed auf ein Förderband zur Herstellung eines Paneels, insbesondere eines Paneels mit ausschließlich Stroh und/oder Reet als Faserwerkstoff und/oder für mechanisch lasttragende Zwecke insbesondere im Umfang des Einsatzgebietes von OSB/1-, OSB/2-, OSB/3-, OSB/4-, P3-, P5- und/oder P7-Platten.

Ein weiterer Aspekt der Offenbarung betrifft eine Streukopfanordnung umfassend einen Außenschichtstreukopf gemäß der obigen Beschreibung, einen Streukopf gemäß der obigen Beschreibung und einen weiteren, baugleichen Außenschichtstreukopf, die alle in einer Reihe und beabstandet voneinander über nur einem Förderband angeordnet sind, welches sich in nur eine Förderbandrichtung bewegen kann.

Ein besonderer Vorteil liegt in der Flexibilität der Streukopfanordnung, die es ermöglicht, gewissermaßen auf Knopfdruck ein Paneel mit gänzlich verschiedenem Schichtaufbau und Längengefälle der Halmhalbschalen in den Außenschichten herzustellen, wobei sowohl kurze wie lange Halmhalbschalen in derselben Streukopfanordnung ohne nennenswerte Umrüstarbeiten verarbeitet werden können. Somit können mit derselben Streukopfanordnung besonders schnell und mit besonders geringem Herstellungsaufwand eine Vielzahl unterschiedlicher Paneeltypen hergestellt werden.

Bevorzugt ist die Einheitsspindeldrehrichtung des einen Außenschichtstreukopfes genau umgekehrt zur Einheitsspindeldrehrichtung des weiteren Außenschichtstreukopfes. So kann ein Paneel mit zwei vergleichbar beschaffenen Oberflächen hergestellt werden.

Bevorzugt sind mehrere oder genau zwei Streuköpfe zwischen zwei Außenschichtstreuköpfen über dem Förderband angeordnet. Eine besonders einfache Variation der Paneeldicke und Integration auch anderer, preiswerter Füllstoffe wie Recycling Altpapier oder Recycling Fasermaterial kann so besonders einfach in das Paneel eingebracht werden.

Die eingangs gestellte Aufgabe wird gelöst durch ein Paneel, das herstellbar ist oder hergestellt wurde oder nur hergestellt wurde durch das oben beschriebene offenbarte Verfahren und/oder dem oben beschriebenen Verfahren, insbesondere in Kombination mit einem oder mehreren der oben beschriebenen bevorzugten Weiterentwicklungen des Verfahrens oder der Verfahren, wobei das Paneel als Faserwerkstoff ausschließlich überwiegend oder zu über 80% zu Halmhalbschalen gespaltene Halme eines oder mehrerer Halmgewächse vorsieht, wobei die Halmhalbschalen zu einem Anteil von mindestens 40%, bevorzugt 50%, und/oder höchstens 80%, bevorzugt 60%, eine Länge von kleiner oder gleich 4 mm aufweisen.

Eine besonders glatte Oberfläche gegenüber OSB-Platten aus Holzbasis sowie eine besonders geringe Dichte bei Erreichen derselben mechanischen Anforderungen gegenüber Spanplatten kann so erreicht werden.

Vorzugsweise hat das Paneel eine Dichte von mindestens 400 kg/m³, bevorzugt 500 kg/m³, besonders bevorzugt 570 kg/m³ und/oder höchstens 950 kg/m³, bevorzugt 800 kg/m³ . Dadurch kann das Paneel für eine Vielzahl von nicht-lasttragenden und/oder lasttragenden Anwendungsbereichen von Möbelbau bis Fußbodenbelägen oder als Bauplatte eingesetzt werden.

Vorzugsweise weist das Paneel eine Dichteverteilung mit einer Standardabweichung von höchstens 20 %, bevorzugt 15 %, besonders bevorzugt 10 % über die Längserstreckung des Paneels auf, also in Längsrichtung des Paneels. Ein Paneel kann so mit besonders wenig und gering ausgeprägten Fehlstellen bereitgestellt werden, die sonst einen höheren Werkzeugverschleiß bei der Weiterverarbeitung, unplanmäßige Verformungen oder Brüche bei Belastung verursachen können.

Mit Faserwerkstoff ist der Basiswerkstoff aus in der Regel pflanzlichen, faserhaltigen Rohstoffen des Paneels gemeint, welcher im Wesentlichen durch Bindemittel zusammengehalten das spätere Paneel bildet, also z.B. Holzspäne bei OSB-Platten.

Das erfindungsgemäße Paneel erlaubt eine Weiterverarbeitung mit besonders geringem Aufwand und kann als eine vorteilhafte Alternative zu OSB-Paneelen oder Spanplatten auf Holzbasis eingesetzt werden, weil ein weiterverarbeitetes Paneel eine besonders geringe Verformungsanfälligkeit aufweist.

Bevorzugt kann das Paneel eine Dicke von mindestens 3 mm, bevorzugt 6 mm, besonders bevorzugt 8 mm und/oder höchstens 40 mm, bevorzugt 25 mm aufweisen. Dadurch kann das Paneel für eine Vielzahl von Anwendungsbereichen verwendet werden.

Bevorzugt weist das Paneel als Faserwerkstoff ausschließlich Stroh oder Reet oder eine Mischung aus Stroh mit einem Anteil von mindestens 10 %, bevorzugt 15 %, besonders bevorzugt 20 % und/oder höchstens 40 %, bevorzugt höchstens 35 %, besonders bevorzugt höchstens 30 % Reet auf.

Ein 100%-Stroh-Paneel, also ein Paneel mit ausschließlich Stroh als Faserwerkstoff, kann eine besonders hohe Dichte und Biegesteifigkeit ermöglichen.

Ein 100%-Reet-Paneel, also ein Paneel mit ausschließlich Reet als Faserwerkstoff, kann mit besonders hoher Dichte und mechanischen Festigkeitswerten im Bereich von z.B. Plywood-Platten realisiert werden. So ist zum Beispiel eine Dichte von 800 kg/m³ oder 950 kg/m³ herstellbar. Die Halmlängen sind dabei um ein Vielfaches länger als bei HDF- oder HDP-Platten. Eine Baustoffplatte im Premium-Segment aus Basis von einem nachhaltigen, natürlichen, nachwachsenden pflanzlichen Rohstoff wird so ermöglicht. Im Übrigen erlauben Reet-Halme eine besonders hohe Arbeitsgeschwindigkeit in der Heißpresse und die erzeugten Paneelen weisen einen vergleichsweise hohen Feuchtigkeitsanteil auf.

Ein Misch-Stroh-Reet-Paneel, also ein Paneel mit ausschließlich Stroh mit mindestens 10 % und/oder höchstens 40 % Reet-Anteil am gesamten Faserwerkstoff des Paneels, kann mit besonders hoher Produktionseffizienz und geringen Herstellungskosten bereitgestellt werden. Um mit Stroh als Rohstoff eine insbesondere lasttragende Baustoffplatte herzustellen ist eine hohe Bindemittelzugabe erforderlich, was maßgeblich Einfluss auf den Herstellungsaufwand hat. Zudem bilden sich beim Heißpressvorgang vereinzelnd Blasen, die zu einer hohen Ausschussrate führen können, was wiederum einen negativen Einfluss auf den Herstellungsaufwand und die Festigkeit haben kann. Durch die Zugabe von Reet in den oben genannten Anteilen kann Blasenbildung während des Heißpressvorgangs wirksam entgegengewirkt oder sogar vermieden werden. Eine besonders geringe Ausschussrate kann so erzielt werden. Eine infolge der Reetzugabe ermöglichte hohe Arbeitsgeschwindigkeit in der Heizpresse sorgt für eine besonders hohe Produktionseffizienz und reduzierten Herstellungsaufwand. Wird zum Beispiel 25 % Reet mit 75 % Stroh vermengt und zu einer insbesondere lasttragenden Baustoffplatte verarbeitet, so kann bei gleichbleibender Dichte und Festigkeit der Ausschuss verglichen mit einer reinen Strohplatte um bis zu 20% reduziert und gleichzeitig bis zu 15% Bindemittel eingespart werden. Ferner weist das Misch-Stroh-Reet-Paneel einen besonders hohen Feuchtigkeitsanteil auf, der dafür Sorge trägt, dass sich die Platte, das Brett oder das Paneel sich später nach der Montage infolge einer erhöhten Luftfeuchtigkeit der Umgebung nicht unerwünscht verformt.

In einer Ausführungsform hat das Paneel bei einer Dicke von 6 bis 10 mm eine Biegefestigkeit in Hauptachse nach EN 310 von min. 20 N/mm², 22 N/mm² oder 30 N/mm² und/oder Biegefestigkeit in Nebenachse nach EN310 von min. 10 N/mm², 11 N/mm² oder 16 N/mm² und/oder eine Querzugfestigkeit nach EN 319 von mindestens 0,3 N/mm², 0,34 N/mm² oder 0,5 N/mm². In einer Ausführungsform hat das Paneel bei einer Dicke von 11 bis 17 mm eine Biegefestigkeit in Hauptachse von min. 18 N/mm², 20 N/mm² oder 28 N/mm² und/oder Biegefestigkeit in Nebenachse von min. 9 N/mm², 10 N/mm² oder 15 N/mm² und/oder eine Querzugfestigkeit von mindestens 0,28 N/mm², 0,32 N/mm² oder 0,45 N/mm².

In einer Ausführungsform hat das Paneel bei einer Dicke von 18 bis 25 mm eine Biegefestigkeit in Hauptachse von min. 16 N/mm², 18 N/mm² oder 26 N/mm² und/oder Biegefestigkeit in Nebenachse von min. 8 N/mm², 9 N/mm² oder 14 N/mm² und/oder eine Querzugfestigkeit von mindestens 0,26 N/mm², 0,3 N/mm² oder 0,4 N/mm².

In einer Ausführungsform hat das Paneel bei einer Dicke von 6 bis 25 mm ein Elastizitätsmodul in Hauptachse nach EN 310 von min. 2500 N/mm², 3500 N/mm² oder 4800 N/mm² und/oder Elastizitätsmodul in Nebenachse nach EN310 von min. 1200 N/mm², 1400 N/mm² oder 1900 N/mm².

In einer Ausführungsform hat das Paneel bei einer Dicke von 6 bis 25 mm ein Elastizitätsmodul in Hauptachse von min. 2500 N/mm², 3500 N/mm² oder 4800 N/mm² und/oder Elastizitätsmodul in Nebenachse von min. 1200 N/mm², 1400 N/mm² oder 1900 N/mm².

Dadurch, dass das Paneel nach einer dieser vier zuletzt beschriebenen Ausführungsformen einen oder alle Kennwerte der Biegefestigkeit, Querzugfestigkeit und/oder des Elastizitätsmoduls erreichen kann, werden Anwendungen entsprechend (in der Reihenfolge der mit "oder" verknüpften Werte) der OSB/1-, OSB/2- und/oder OSB/4-Standard nach EN300 insbesondere hinsichtlich der Belastbarkeit bei gleichzeitig besonders geringer Dichte und Oberflächenrauigkeit erreicht, wobei hier bei der Biegefestigkeit, Querzugfestigkeit und dem Elastizitätsmodul die Anforderungen an OSB/2 und/oder OSB/3 gleich sind.

In einer Ausführungsform hat das Paneel eine Biegefestigkeit nach zyklischem Test in Hauptachse nach EN 321/310 von min. 9 N/mm² oder 15 N/mm², eine Querzugfestigkeit nach zyklischem Test nach EN321/319 von min. 0,18 N/mm² oder 0,21 N/mm² und/oder eine Querzugfestigkeit nach Kochtest nach EN1087-1/EN319 von min. 0,15 N/mm² oder 0,17 N/mm². Dadurch können OSB/3 und/oder OSB/4 Standards - insbesondere für Dicken ab 6 mm - entsprechend der Reihenfolge der "oder" verknüpften Werte erreicht und daraus resultierende Anwendungsbereiche bei gleichzeitig besonders geringer Dichte und Oberflächenrauigkeit abgedeckt werden.

In einer Ausführungsform hat das Paneel eine Biegefestigkeit von 10,5 N/mm², 15 N/mm², 18 N/mm² oder 22 N/mm² und/oder eine Querzugfestigkeit von 0,28 N/mm², 0,45 N/mm², 0,45 N/mm² oder 0,75 N/mm². Dadurch können P1, P3, P5 und/oder P7 Standards nach EN 312 - insbesondere für Dicken ab 6 mm - entsprechend der Reihenfolge der "oder" verknüpften Werte erreicht und daraus resultierende Anwendungsbereiche bei gleichzeitig besonders geringer Dichte und Oberflächenrauigkeit erschlossen werden.

In einer Ausführungsform hat das Paneel ein Elastizitätsmodul von min. 2050 N/mm², 2550 N/mm² oder 3350 N/mm², eine Querzugfestigkeit nach zyklischem Test von min. 0,15 N/mm², 0,25 N/mm² oder 0,41 N/mm² und/oder eine Querzugfestigkeit nach Kochtest von min. 0,09 N/mm², 0,15 N/mm² oder 0,25 N/mm². Dadurch können P3, P5 und/oder P7 Standards - insbesondere für Dicken ab 6 mm - entsprechend der Reihenfolge der "oder" verknüpften Werte erreicht und daraus Einsatzgebiete für Produkte mit entsprechenden Zulassungsvoraussetzungen bei gleichzeitig besonders geringer Dichte und Oberflächenrauigkeit erschlossen werden.

In einer bevorzugten Ausführungsform hat das Paneel eine Dichte von mindestens 520 kg/m³ oder 650 kg/m3 und/oder höchstens 950 kg/m³, bevorzugt höchstens 720 kg/m³ zur Verwendung für nicht lasttragende Anwendungen beispielsweise unter Erfüllung des OSB/1-Standards und/oder lasttragende Anwendungen beispielsweise unter Erfüllung der Anforderungen gemäß OSB/2-, OSB/3- und/oder OSB/4-Standards. Beispielsweise kann bei einem Paneel an der unteren Dichte-Grenze durch einen hohen Bindemittelanteil ebenfalls der OSB/4-Standard erfüllt werden. Eine besonders leichte Handhabbarkeit eines Paneels kann so bei gleichzeitig besonders geringem Rohstoffbedarf erzielt werden.

In einer bevorzugten Ausführungsform hat das Paneel eine Dichte von mindestens 570 kg/m³ und/oder höchstens 950 kg/m³, bevorzugt höchstens 680 kg/m³ zur Verwendung für nicht lasttragende Anwendungen beispielsweise unter Erfüllung des P1-Standards und/oder lasttragende Anwendungen beispielsweise unter Erfüllung der Anforderungen gemäß P3-, P5- und/oder P7-Standards. Beispielsweise kann bei einem Paneel an der unteren Dichte-Grenze durch einen hohen Bindemittelanteil ebenfalls der P7-Standard erfüllt werden. Eine besonders leichte Handhabbarkeit eines Paneels kann so bei gleichzeitig besonders geringem Rohstoffbedarf erzielt werden.

Insbesondere ist das Paneel so beschaffen, dass das Paneel eine Beschichtung unmittelbar auf einer unbehandelten oder abgetragenen Oberfläche aufweist. Ein Paneel auf Basis von Halmgewächsen als Rohstoff mit einer besonders hochwertigen Oberfläche kann auf diese Weise mit besonders geringem Herstellungsaufwand bereitgestellt werden.

Bei der Variante mit abgetragener Oberfläche erfolgt ein Abtragen vorteilhaft um höchstens 2 mm. Eine besonders glatte Oberfläche kann so ohne besonders großen Aufwand erzeugt werden. Ein Abtragen kann vorteilhaft durch Abschleifen oder Schleifen (engl. "sanding" or "grinding") zur Erzielung einer hohen Genauigkeit und Produktionseffizienz erfolgen. Ein Abtragen kann ferner durch Hobeln oder Schälen zur Erzielung eines geringen und glatten Abtrags oder durch Sandstrahlen zur Erzielung einer matten Oberfläche erfolgen. Ein Abtragen kann auch durch Stampfen oder Pressen zur Erzielung einer glatten, dichten Oberfläche oder durch chemische Verfahren oder Ätzen zur Erzielung einer strukturierten Oberfläche erfolgen.

In einer bevorzugten Ausführungsform weist das Paneel eine Oberflächenrauigkeit einerinsbesondere unmittelbar nach dem Heißpressen unbehandelten oder abgetragenen - Oberfläche von einem Mittenrauwert Ra von mindestens 0,050 mm, bevorzugt 0,075 mm, besonders bevorzugt 0,100 mm und/oder höchstens 0,400 mm, bevorzugt 0,300 mm, besonders bevorzugt 0,250 mm auf. Der Mittenrauwert Ra entspricht dem arithmetischen Mittel der Abweichungen von der Mittellinie. Ein unmittelbares Aufbringen einer Beschichtung oder eines Kraftpapiers auf die unbehandelte oder abgetragene - insbesondere abgeschliffene - Oberfläche wird so ermöglicht.

Eine Beschichtung kann vorteilhaft erzeugt werden durch Lackieren oder Auftragen eines feuerhemmenden Mittels oder einer feuerhemmenden Farbe zur Erzielung einer sehr widerstandsfähigen Schicht und zum Einsparen eines zusätzlichen Färbungsschrittes.
Eine Beschichtung kann vorteilhaft erzeugt werden durch Aufbringen einer ein- oder mehrlagigen UV (Ultra-Violett) vulkanisierenden und/oder UV aushärtenden Beschichtung (engl. ultra violet curable coating) zur Erzielung einer besonders dünnen, widerstandsfähigen und wasserabweisenden Schicht. Beispielsweise kann dazu das UV Beschichtungsmittel von der Firma Treffert Coatings GmbH benutzt werden. Vorzugsweise kann erst ein Bedrucken mit Farbpigmenten zur Vermeidung von Blendeffekten und danach ein Auftragen oder Bedrucken mit dem UV Beschichtungsmittel erfolgen, um die Farbpigmente besonders wirkungsvoll vor Umgebungseinflüssen zu schützen.

Eine Beschichtung kann vorteilhaft erzeugt werden durch Auftragen einer Folie oder Gießfolie (engl. "cast film") zur Erzielung einer besonders dünnen und dichten Beschichtung, vorzugsweise aus Polypropylen (PP), beispielsweise von der Firma Daikin PPA.
Eine Beschichtung kann vorteilhaft erzeugt werden durch Aufbringen mindestens eines Phenolharz-Papiers (engl. "phenolic paper"), also ein mit Phenolharz versehenes Papier oder Hartpapier, zum Beispiel zur vorteilhaften Verwendung für eine Betonschalung.

Eine Beschichtung kann vorteilhaft eine Decklage aus Furnier, MDF oder Dünnspanplatte mit dem Aufbau einer Tischlerplatte (engl. "Block Board") zur Herstellung einer Tischlerplatte auf Strohbasis mit den eingangs beschriebenen Vorteilen sein. Eine Beschichtung kann vorteilhaft so beschaffen sein, dass das Paneel mit der Beschichtung zur Verwendung als Formplatte für Gussteile (engl. "Mold plate finish") eingesetzt werden kann. Eine Beschichtung kann vorteilhaft ein Furnier (engl. "veneer"), eine Korkschicht, ein MDF oder eine Laminierung sein. Eine Beschichtung kann vorteilhaft ein Furnier (engl. "veneer"), eine Laminierung (engl. "laminate") und eine insbesondere transparente Overlay- oder Verkleidungsschicht (engl. "overlay") umfassen oder daraus bestehen oder genau in dieser Reihenfolge aufgebaut sein. Ein besonders robustes und hochwertiges Paneel kann so erzeugt werden.

Eine Beschichtung kann vorteilhaft mindestens ein Melamin-Papier (engl. "melamine-faced lamination paper") insbesondere an beiden Oberflächen und zu oberst eine insbesondere transparente Overlay- oder Verkleidungsschicht umfassen oder daraus bestehen oder genau in dieser Reihenfolge aufgebaut sein. Ein besonders robustes und hochwertiges Paneel, ein sogenanntes "melamine faced panel", kann so erzeugt werden.

In einer bevorzugten Ausführungsform weist das Paneel nur eine oder höchstens drei Schichten Kraftpapier unmittelbar auf einer nach dem Heißpressen unbehandelte oder um mindestens 0,10 mm, bevorzugt 0,15 mm, besonders bevorzugt 0,20 mm und/oder höchstens 0,35 mm, bevorzugt 0,3 mm, besonders bevorzugt 0,25 mm abgeschliffene Oberfläche auf. Eine Zwischenschicht zum Glätten kann so eingespart werden.

Bevorzugt umfasst das Paneel eine Oberfläche mit durch Farbpigmente erzeugtes Dekor und/oder eine Gegenzugschicht insbesondere aus Kraftpapier oder in Form einer Kunststoffschicht. Ein Paneel mit einer Oberfläche mit durch Farbpigmente erzeugtes Dekor ermöglicht eine verbesserte Lichtabsorption zur Vermeidung von Blendeffekten. Ein Paneel mit einer Gegenzugschicht aus Kraftpapier oder Kunststofffolie wirkt einem Verformen des Paneels bei Belastung durch auftretende Biegekräfte entgegen.

In einer Ausführungsform umfasst das insbesondere rohe - also unbehandelte - Paneel eine Mittelschicht zwischen zwei Außenschichten mit insbesondere Halmhalbschalen mit einer Länge von höchstens 150 mm, bevorzugt höchstens 130 mm, besonders bevorzugt höchstens 110 mm, wobei die Mittelschicht und die Außenschichten parallel zur Oberfläche des Paneels orientiert sind und/oder die Halmhalbschalen in der Mittelschicht tendenziell oder überwiegend querorientiert sind und/oder in den Außenschichten tendenziell oder überwiegend längsorientiert sind.

Bei einer der Außenschichten können Halmhalbschalen mit einer Länge größer als 9,5 mm und kleiner als 135 mm zu einem Anteil von mindestens 30% an der Oberfläche des Paneels vertreten sein, zudem ein Längengefälle der Halmhalbschalen von langen Halmhalbschalen an der Oberfläche zu kurzen Halmhalbschalen an einer Grenzfläche von der Außenschicht zu der Mittelschicht vorliegen, und an der Grenzfläche Halmhalbschalen mit einer Länge größer als 9,5 mm nur zu einem Anteil von höchstens 30% vertreten sein.

Bei einer der Außenschichten können ebenfalls Halmhalbschalen mit einer Länge größer als 9,5 mm und kleiner als 135 mm nur zu einem Anteil von höchstens 30% an der Oberfläche des Paneels vertreten sein, zudem ein Längengefälle der Halmhalbschalen von kurzen Halmhalbschalen an der Oberfläche zu langen Halmhalbschalen an einer Grenzfläche von der Außenschicht zu der Mittelschicht vorliegen, und an der Grenzfläche Halmhalbschalen mit einer Länge größer als 9,5 mm zu einem Anteil von mindestens 30% vertreten sein.

Bei dem Längengefälle können sämtliche Längen von Halmhalbschalen in den Bereichen kleiner als 4 mm, 4 mm bis 9,5 mm und 9,5 mm bis 135 mm vertreten sein. Damit ist gemeint, dass keiner dieser Längenbereiche durch entsprechend lange Halmhalbschalen nicht abgedeckt wird. Eine besonders gute Biegesteifigkeit kann so erhalten werden.

Mit "Anteil an der Oberfläche" ist der sichtbare Flächenanteil von Halmhalbschalen der angegebenen Längenbereiche an der gesamten Oberfläche gemeint. Dieser "Anteil an der Oberfläche" kann über optische Messverfahren bestimmt werden.

Insbesondere umfasst das Paneel insgesamt einen Anteil, also Gewichtsanteil, Halmhalbschalen von mindestens 3%, bevorzugt 5%, besonders bevorzugt 8%, und/oder höchstens 15 %, bevorzugt 13 %, besonders 11 % mit einer Länge größer 9,5 mm und/oder höchstens 150 mm, vorzugsweise 130 mm, besonders bevorzugt 110 mm.

Mit Außenschicht und Mittelschicht ist eine zur Oberfläche parallel orientierte Schicht gemeint, die in der Regel einer separaten Schicht der Streugutmatte, die durch einen separaten Streukopf angehäuft wurde, zugeordnet werden kann.
Mit Grenzschicht ist die Fläche gemeint, an der die Außenschicht und die Mittelschicht zusammentreffen. Der "Anteil an der Oberfläche" kann bei einer Grenzschicht nur durch ein Auftrennen der Schichten an der Grenzschicht zum Zwecke eines z.B. optischen Vermessens ermittelt werden.

Durch eine Oberfläche des Paneels, welche Halmhalbschalen mit einer Länge größer 9,5 mm zu einem Anteil von 30 % aufweist, kann ein Paneel mit besonders hohem Reflexionsgrad von Licht bereitgestellt werden, welches bei Verwendung für den Innenausbau zum Aufhellen eines Raumes beitragen kann. Gleichzeitig weist das Paneel im Querschnitt der Außenschicht ein Längengefällt der Halmhalbschalen von langen Halmhalbschalen an der Oberfläche zu kurzen Halmhalbschalen an der Übergangsfläche zur Mittelschicht auf. Dies kann eine besonders hohe Bruchresistenz ermöglichen.

Durch eine Grenzfläche, welche Halmhalbschalen mit einer Länge größer 9,5 mm zu einem Anteil von 30 % aufweist, also an der Oberfläche derselben Außenschicht nur noch kurze Halmhalbschalen aufweisen kann, wird ein Paneel mit besonders rutschfester Oberfläche ermöglicht. Gleichzeitig weist das Paneel im Querschnitt der Außenschicht ein Längengefällt der Halmhalbschalen von kurzen Halmhalbschalen an der Oberfläche zu langen Halmhalbschalen an der Übergangsfläche zur Mittelschicht auf. Dies kann eine besonders hohe Biegsamkeit ermöglichen.

Ein weiterer Aspekt der Erfindung betrifft die Verwendung des in den vorhergehenden Seiten beschriebenen - insbesondere rohen - Paneels, das durch das oben beschriebene Verfahren insbesondere in Kombination mit den oben beschriebenen bevorzugten Weiterentwicklungen des Verfahrens hergestellt wurde, als Platte für den Innenausbau einschließlich Möbel zur Verwendung im Trockenbereich oder als Bauplatte für den Gebäude- und Rohbau.

Ein weiterer Aspekt der Erfindung betrifft die Verwendung des in den vorhergehenden Seiten beschriebenen - insbesondere weiterverarbeiteten - Paneels, das durch das oben beschriebene Verfahren insbesondere in Kombination mit den oben beschriebenen bevorzugten Weiterentwicklungen des Verfahrens hergestellt wurde, als Platte für lasttragende Zwecke zur Verwendung im Feuchtebereich oder als Fußboden- oder Wandbelag für den Innenausbau, insbesondere unter Erfüllung der mechanischen Anforderungen gemäß der Standards OSB/1, OSB/2, OSB/3, OSB/4, P3, P5 und/oder P7.

Die Aspekte der Erfindung werden nachfolgend anhand von durch Zeichnungen schematisch dargestellten Ausführungsbeispielen näher erläutert und mit Bezug zu den Zeichnungen die Ausführungsformen sowie zusätzliche vorteilhafte Ausgestaltungen näher beschrieben.

Es zeigt:
Figur 1: Schematische Darstellung eines Streukopfes
Figur 2: Schematische Darstellung eines Ausschnittes einer Walzenreihe
Figur 3: Schematische Darstellung einer Streukopfanordnung mit einem Streukopf und einem Außenschichtstreukopf
Figur 4: Schematische Darstellung eines Querschnitts durch ein mit dem Streukopf hergestelltes Paneel
Figur 5: Messkurven von Dichteverläufen in Längsrichtung
Figur 6: Schematische Darstellung eines Querschnitts durch ein Paneel mit langen Halmhalbschalen an beiden Oberflächen
Figur 7: Schematische Darstellung eines Querschnitts durch ein Paneel mit kurzen Halmhalbschalen an beiden Oberflächen

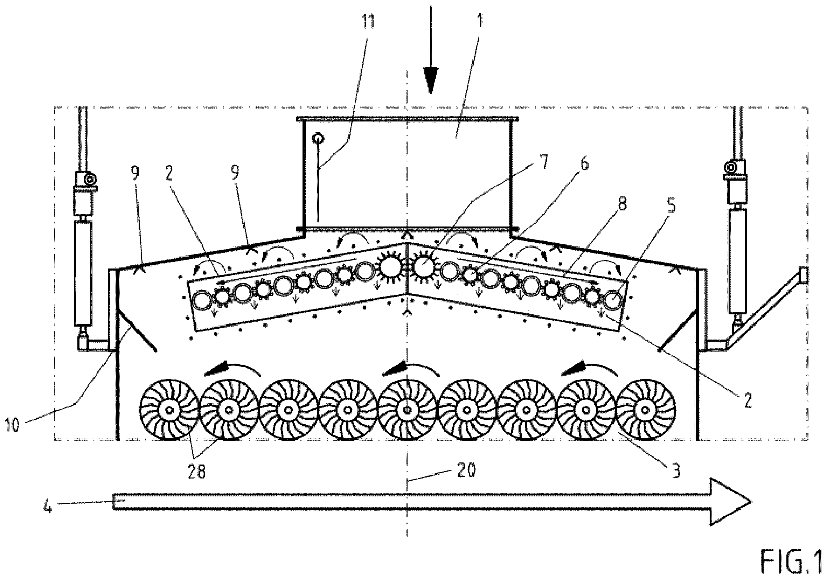

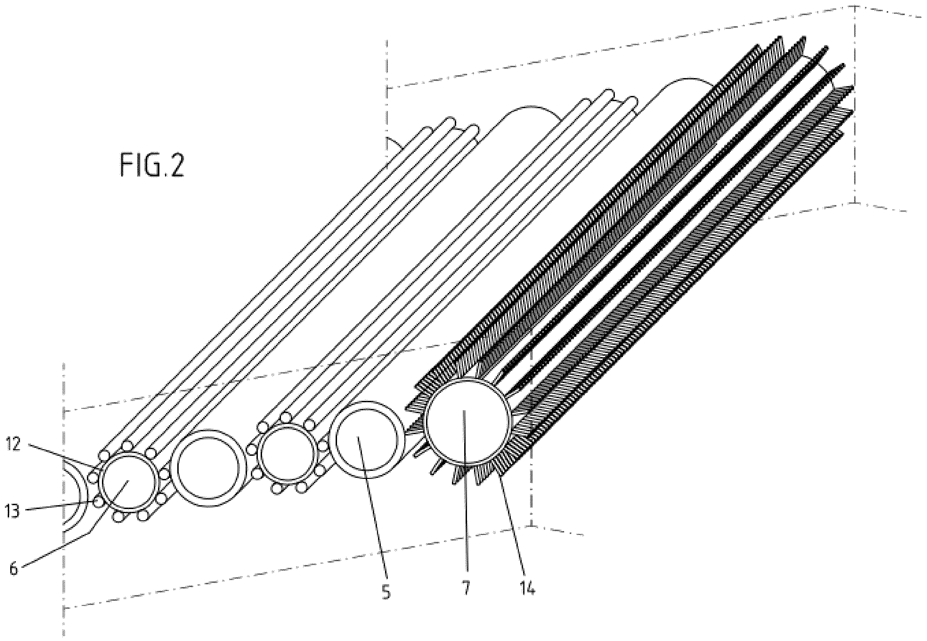

Die Figur 1 zeigt einen Streukopf umfassend eine Glattwalze 5 als eine Förderwalze mit einer rotationssymmetrischen Mantelfläche und einer Planetenwalze 6 als eine Förderwalze mit nicht rotationssymmetrischer Mantelfläche, wobei mehrere Planetenzylinder 13 als Erhebungen auf einer Mantelfläche eines Grundzylinders 12 achsparallel angeordnet sind. Halmhalbschalen in Form von lose zusammenhängenden Ansammlungen werden über die Materialzuflusseinheit 1 auf die Igelwalzen 7 als jeweils erste Förderwalze zweier um eine Mittelebene 20 spiegelsymmetrisch angeordneter Walzenreihen 2 zugeführt. Durch eine Vielzahl Radialstielen 14 der Igelwalze 7, die mit hoher Dichte auf der Mantelfläche der Igelwalze angeordnet sind, erfolgt ein Auftrennen der Ansammlungen in möglichst separierte Halmhalbschalen. Die Figur 2 zeigt den genauen Aufbau der Förderwalzen 5, 6, 7 der Walzenreihe 2. Die rotierende Glattwalze 5 und eine benachbarte, unmittelbar angrenzende, rotierenden Planetenwalze 6 mit um einen Grundzylinder 12 angeordnete Planetenzylinder 13 bilden einen sich öffnenden und schließenden Vertikaldurchlass, der in Figur 2 in geschlossener Stellung gezeigt ist. In der geschlossenen Stellung werden ein Planetenzylinder 13 und die Glattwalze 5 nur durch einen engen Schließspalt getrennt, der keine nennenswerten Mengen von Halmhalbschalen nach unten durchlässt.

Durch die Rotation der Förderwalzen entsteht ein immer größer werdender Abstand zwischen dem sich von der Glattwalze 5 entfernenden Planetenzylinder 13, bis ein nächster Planetenzylinder 13 sich der Glattwalze 5 nähert und so eine Vertikaldurchlassöffnung wieder zunehmend verkleinert.

Dieser Abstand bildet zusammen mit der Walzenreihenbreite auf einer Ebene, die durch die Förderwalzenachsen der Walzenreihe aufgespannt werden, die Vertikaldurchlassöffnung.

Durch die runde Form der Planetenzylinder 6 werden lange Halmhalbschalen in Walzenreihenförderrichtung 8 gedrückt, ohne zwangsläufig in die Vertikaldurchlassöffnung zwischen Glattwalze 5 und Planetenwalze 6 gezogen zu werden. Kurze Halmhalbschalen in der Anhäufung auf der Walzenreihe 2 werden je nach Abstand zum Grundzylinder 12 der Planetenwalze 6 entweder durch die Planetenzylinder 13 seitlich oder schräg nach oben verdrängt oder in Richtung der Grundwalze 12 gedrückt, um nach unten transportiert zu werden. Dadurch wird nur ein Teil der angehäuften Halmhalbschalen mit geringerem Abstand zum Grundzylinder 12 nach unten befördert. Durch die Querorientierung der Planetenzylinder erfolgt gleichzeitig eine erste Querorientierung insbesondere bei langen Halmhalbschalen, wenn diese in den Zwischenraum zwischen Planetenzylinder 13 und Grundzylinder 12 wandern.

Kurze Halmhalbschalen werden durch Flächenreibung mit eine rotierenden Glattwalze 5 durch die Mantelfläche der Glattwalze 5 mitgenommen und weitertransportiert. Lange Halmhalbschalen erfahren häufig durch rotierenden Glattwalzen infolge der geringen Flächenauflage nur einen geringen Vorschubimpuls und werden vielmehr durch den mehr oder weniger zusammenhängenden Strom von Halmhalbschalen mitgezogen, der durch die Planetenwalzen 6 in Walzenreihenförderrichtung 8 durch die Planetenzylinder 13 gewissermaßen angeschoben wird.

Durch Vergrößern oder Verringern der Rotationsgeschwindigkeit der Förderwalzen 5, 6, 7 und/oder des Neigungswinkels der Walzenreihe 1, der in der Regel bei einem Streukopf anders als die Rotationsgeschwindigkeit der Förderwalzen 5, 6, 7 nicht variable einstellbar ist, kann der Strom von Halmhalbschalen so eingestellt werden, dass am Ende einer Walzenreihe 2 nahezu alle Halmhalbschalen durch Vertikaldurchlassöffnungen nach unten befördert wurden und nur vereinzelnd Halmhalbschalen außen am Ende einer Walzenreihe 2 über das Ende hinaus wandern und dort nach unten fallen. Ein über die Walzenreihe 2 homogenes Verteilen und Streuen kann daher erreicht werden. Diejenigen Halmhalbschalen, die vereinzelnd über das äußere Ende der Walzenreihe 2 hinaus transportiert werden, werden insbesondere durch eine Rückwurfeinrichtung 10, vorzugsweise ein zur Mitte geneigtes Blech, in einem Abstand von mindestens ein bis drei Förderwalzendurchmessern zum Ende der Walzenreihe 2 angeordnet, welche dafür Sorge trägt, dass außen hinabfallende Halmhalbschalen in Richtung Mitte auf die unter der Walzenreihe 2 angeordnete Schaufelräderreihe 3 zugeführt werden, um dort verteilt zu werden. Ein Paneel mit besonders geringer Dichteschwankung über die Länge kann so erzeugt werden.

Insbesondere sind Ablenkeinrichtungen 9, vorzugsweise in Form dachförmiger Bleche - also Bleche mit einer umgedrehten V-Form - zentriert zur Mittelebene 20 zwischen Materialzuflusseinheit 1 und den Igelwalzen 7 und/oder zentriert zur Mittelebene 20 zwischen den Walzenreihen 2 und der Schaufelräderreihe 3 vorgesehen, um die von der Materialzuflusseinheit 1 hinabfallenden Halmhalbschalen möglichst mittig aufzutrennen und auf beide Walzenreihen 2 oder die Schaufelräderreihe 3 möglichst gleichmäßig zu verteilen.

Insbesondere ist eine Führungsklappe 11 innerhalb der Materialzuflusseinheit 1 vorgesehen, mit der die in die Materialzuflusseinheit 1 einströmenden Halmhalbschalen so umgelenkt werden können, dass der Strom möglichst mittig auf die Ablenkeinrichtung 9 zwischen der Materialzuflusseinheit 1 und den Walzenreihen 2 trifft und/oder möglichst zu gleichen Teilen auf die Igelwalzen 7 der beiden Walzenreihen 2 trifft, um eine besonders gleichmäßige Verteilung der Halmhalbschalen auf beide Walzenreihen 2 zu ermöglichen.

Insbesondere sind weitere Ablenkeinrichtungen 9 an einer Gehäusewand oberhalb einer Walzenreihe 2 und/oder im Bereich des Anfangs einer Walzenreihe 2 und/oder im Bereich des Endes einer Walzenreihe 2 vorgesehen, um den Strom von Halmhalbschalen aufzubrechen.

Die unterhalb der Walzenreihe 2 angeordnete Schaufelräderreihe 3 mit aneinander angrenzenden Schaufelrädern, die sich vorzugsweise alle nur in dieselbe Richtung drehen, sorgt für eine verbesserte Orientierung der Halmhalbschalen in Querrichtung. Dazu weisen die Schaufelräder eine Vielzahl von Taschen auf, die mit einer offenen Seite in Drehrichtung orientiert sind. Die Taschen werden durch jeweils zwei V-förmige Schaufeln gebildet, die unter einem spitzen Winkel zu einer Mantelfläche einer Zylinderwalze des Schaufelrads mit der Spitze der V-Form entgegen der Drehrichtung zeigen. Besonders lange Halmhalbschalen können so wirkungsvoll durch die Schaufelräder eingefangen und durch Befördern in die Taschen querorientiert nach unten auf das Förderband 4 gestreut werden.

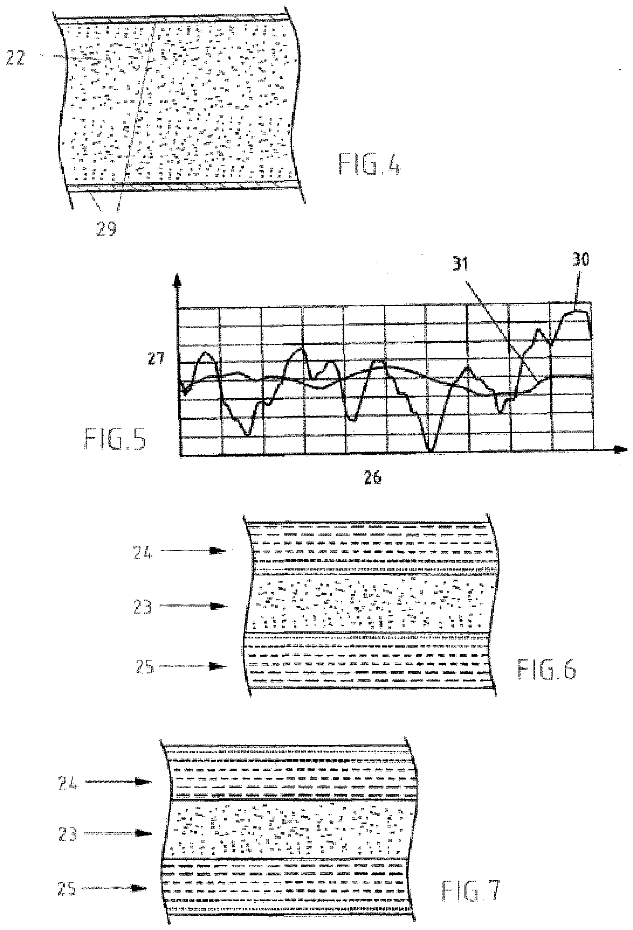

Die Figur 4 zeigt einen schematisch dargestellten Querschnitt eines Paneels, welches hergestellt wurde, indem Halmhalbschalen aus Stroh und/oder Reet zu einem Anteil, also Gewichtsanteil, von 80% mit einer Länge kleiner als 4 mm ausschließlich durch den Streukopf - oder grundsätzlich auch mehreren nebeneinander über dem Förderband 4 angeordneten insbesondere baugleichen Streuköpfen - auf ein Förderband 4 gestreut wurden und dort zu einer Streugutmatte angehäuft wurden. Ein rohes Paneel mit einer Halmhalbschalenschicht 22 wurde durch Heizpressen der Streugutmatte erzeugt.

Das rohe Paneel hat insbesondere eine Dicke von mindestens 11 mm und/oder höchstens 17 mm, eine Biegefestigkeit in Hauptachse von min. 20 N/mm², eine Biegefestigkeit in Nebenachse von min. 10 N/mm², ein Elastizitätsmodul in Hauptachse von min. 3500 N/mm², ein Elastizitätsmodul in Nebenachse von min. 1400 N/mm², eine Querzugfestigkeit von min. 0,7 N/mm², eine Biegefestigkeit nach zyklischem Test in Hauptachse von min. 8 N/mm², eine Querzugfestigkeit nach zyklischem Test von min. 0,36 N/mm² und/oder eine Querzugfestigkeit nach Kochtest von min. 0,23 N/mm². Das Paneel kann damit die mechanischen Anforderungen des OSB/3 Standards nach EN300 und/oder des P7 Standards nach EN312 erfüllen, wodurch entsprechend zugelassene Einsatzgebiete ermöglicht werden, die sonst einem Paneel auf Basis von Halmgewächsen als Rohstoff nicht zugänglich wären.

Vorzugsweise weist das Paneel zudem eine Quelldicke nach 24 Stunden (engl. "swelling thickness after 24 h") nach EN317 von höchstens 10% und/oder eine Quelldicke nach zyklischem Test nach EN321 von höchstens 11% auf. Damit können auch die wesentlichen restlichen Anforderungen des OSB/3 Standards nach EN300 und des P7 Standards nach EN312 erfüllt und ein besonders weites Einsatzgebiet eröffnet werden.

Nach dem Heizpressen wurde auf die Halmhalbschalenschicht 22 als Beschichtung vorzugweise nur eine Schicht in Melaminharz getränktes Kraftpapier 29 unmittelbar auf die unbehandelte oder um 0,2 mm abgeschliffene Oberfläche durch Heizpressen aufgebracht wurde und/oder das Kraftpapier zuvor oder nach dem Heizpressen ein durch Farbpigmente erzeugtes Dekor umfasst, um z.B. als Fußbodenbelag verwendet werden zu können.

Die Figur 5 zeigt zwei exemplarische Messkurven, welche den Dichteverlauf der Dichte 27 über die Länge 26 von zwei unterschiedlich erzeugten Streugutmatten darstellen. Die Streukopfmesskurve 31 zeigt den Dichteverlauf einer Streugutmatte, die einem rohen Paneel, insbesondere dem Paneel aus Figur 4, vor dem Heizpressen zugrunde liegt. Die Dichte der Streugutmatte an einem Messpunkt in Längsrichtung entspricht im Wesentlichen der Dichte des Paneels an der Stelle bzw. dem Messpunkt nach dem Heizpressen. Die Referenzmesskurve 30 zeigt den Dichteverlauf einer Streugutmatte, die mit einem herkömmlichen Streukopf nach dem Stand der Technik ohne Vertikaldurchlässe bestehend aus einer Glattwalze 5 und einer Planetenwalze 6 erzeugt wurde. Wie die Gegenüberstellung zeigt, kann durch den erfindungsgemäßen Streukopf die Streuung der Dichte signifikant reduziert werden und so ein Paneel mit besonders wenig und gering ausgeprägten Fehlstellen bereitgestellt werden, die sonst einen höheren Werkzeugverschleiß bei der Weiterverarbeitung, unplanmäßige Verformungen oder Brüche bei Belastung verursachen können.

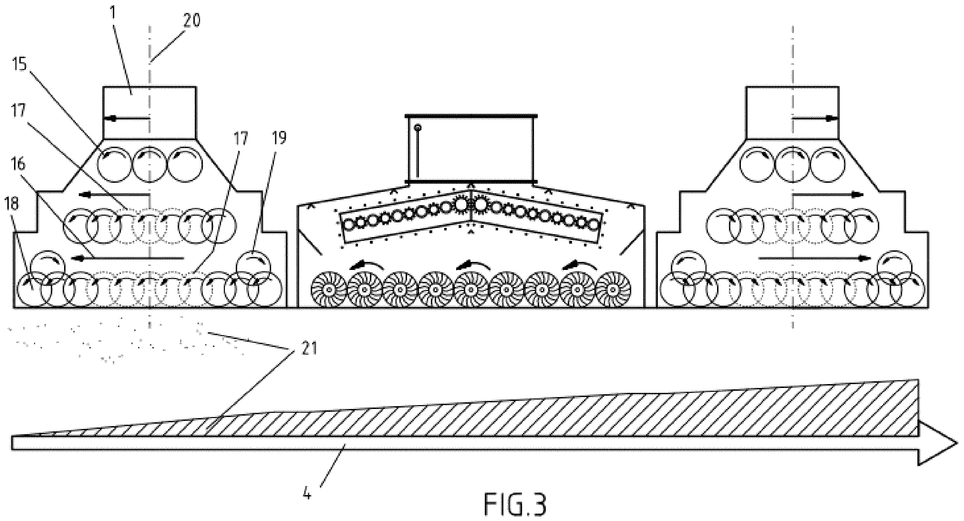

Die Figur 3 zeigt eine schematische Streukopfanordnung mit zwei baugleichen Außenschichtstreuköpfen und einem dazwischen angeordneten Streukopf, der dem Streukopf aus Figur 1 entspricht. Die gesamte Streukopfanordnung ist über nur einem Förderband 4 angeordnet, um eine mehrschichtige Streugutmatte auf dem Förderband 4 zu erzeugen. Das Förderband 4 läuft nur in eine Förderbandrichtung (in Figur 3 nach rechts).

Die schematisch dargestellten Außenschichtstreuköpfe weisen beide drei Reihen hintereinander angeordneter Spindeln 17, 18 auf, wobei die Reihen von Spindeln 17, 18 pyramidenförmig übereinander und mittig unter der Materialzuflusseinheit 1 angeordnet sind und bei beiden Außenschichtstreuköpfe jeweils nur eine einzige, gemeinsame Einheitsspindeldrehrichtung 15 sämtlicher Spindeln 17, 18 des Außenschichtstreukopfes zum Befördern der Halmhalbschalen, die nicht schon zwischen zwei Spindeln 17, 18 nach unten gefallen sind, in nur eine Einheitsspindelförderrichtung 16 vorgesehen ist.

Der erste Außenschichtstreukopf auf der Seite des Streukopfes in entgegengesetzter Förderbandrichtung (in Figur 3 der linke Streukopf) sieht eine Einheitsspindeldrehrichtung 15 entgegen der Förderbandrichtung, also entgegen dem Uhrzeigersinn, vor. Auf dem Weg in Einheitsspindelförderrichtung 16 oberhalb der Reihe von Spindeln 17, 18 fallen zunächst kleine Halmhalbschalen durch die mittig angeordneten Spindeln 18 mit kleinen Scheibenabstand und danach - besonders im Bereich der Spindeln 18 mit großen Scheibenabständen - vermehrt lange Halmhalbschalen nach unten. Durch die konstante Bewegung des Förderbands 4 in Förderbandrichtung werden so als erstes lange Halmhalbschalen auf das Förderband 4 gestreut. Auf die langen Halmhalbschalen fallen dann mit Bewegung des Förderbands 4 in Förderbandrichtung immer kürzer werdende Halmhalbschalen, so dass ein Längengefälle in dieser ersten Außenschicht der Streugutmatte - und damit des späteren rohen Paneels - von langen Halmhalbschalen an der Oberfläche bzw. unten zu immer kürzer werdenden Halmhalbschalen nach oben hin über dem Querschnitt entsteht. Insbesondere werden auch dem ersten Außenschichtstreukopf Halmhalbschalen zugeführt, die zu einem Anteil von insgesamt 10 % eine Länge zwischen 9,5 mm bis 130 mm und zu einem Anteil von insgesamt 40 % eine Länge kleiner 4 mm haben.

Auf diese erste Außenschicht der Streugutmatte werden durch den Streukopf tendenziell querorientierte Halmhalbschalen mit einem Anteil von insgesamt 80 % mit einer Länge kleiner 4 mm aufgeschichtet und so eine Mittelschicht ohne Längengefälle über dem Querschnitt erzeugt. Die Längenverteilung der Halmhalbschalen, die dem Streukopf zugeführt werden, kann also von der Längenverteilung der Halmhalbschalen für einen oder beide Außenschichtstreuköpfe abweichen.

Der zweite Außenschichtstreukopf auf der Seite des Streukopfes in Förderbandrichtung (in Figur 3 der rechte Streukopf) sieht eine - verglichen mit dem ersten Außenschichtstreukopf umgekehrte, also genau entgegengesetzte - Einheitsspindeldrehrichtung 15 in der Förderbandrichtung, also im Uhrzeigersinn, vor. Auf dem Weg in Einheitsspindelförderrichtung 16 oberhalb der Reihe von Spindeln 17, 18 fallen zunächst überwiegend kleine Halmhalbschalen und danach mehr und mehr lange Halmhalbschalen nach unten. Diese längenabhängige Verteilung wird durch die pyramidenförmige Anordnung der mittlernen Spindeln 17 begünstigt. Durch die konstante Bewegung des Förderbands in Förderbandrichtung werden so als erstes kurze Halmhalbschalen auf die Mittelschicht der Streugutmatter auf dem Förderband gestreut. Auf die kurzen Halmhalbschalen fallen dann mit Bewegung des Förderbands 4 in Förderbandrichtung immer länger werdende Halmhalbschalen, so dass ein Längengefälle in dieser zweiten Außenschicht der Streugutmatte - und damit des späteren rohen Paneels - von langen Halmhalbschalen an der Oberfläche zu immer kürzer werdenden Halmhalbschalen nach in Richtung Mittelschicht über dem Querschnitt entsteht. Insbesondere werden auch dem ersten Außenschichtstreukopf Halmhalbschalen zugeführt, die einem Anteil von insgesamt 10 % mit einer Länge zwischen 9,5 mm bis 130 mm und zu einem Anteil von insgesamt 40 % mit einer Länge kleiner 4 mm haben.

Das so hergestellte Paneel hat nach dem Heißpressen einen Querschnitt, der schematisch in Figur 6 dargestellt ist.

Die Figur 7 zeigt einen anderen Paneeltyp, der dadurch hergestellt werden kann, dass die oben beschriebenen Einheitsdrehrichtungen 15 der Außenschichtstreuköpfe wie in Figur 3 dargestellt jeweils umgekehrt werden. Kurze Halmhalbschalen sind dann an beiden Oberflächen vorzufinden und lange Halmhalbschalen in Richtung oder an der Grenzschicht zur Mittelschicht.

Insbesondere ist die Materialzuflusseinheit 1 so beschaffen, dass die Führungsklappe 11 in Richtung der Mittelebene 20 geschwenkt werden kann, vorzugsweise um eine Schwenkachse, die quer zur Förderbandrichtung verläuft. Die Schwenkachse ist vorzugsweise so an einer Seite der Materialzuflusseinheit 1 in oder entgegen der Förderbandrichtung und bevorzugt in einem oberen Bereich der Materialzuflusseinheit 1 angeordnet, dass die Führungsklappe 11 in Richtung der Mittelachse 20 verschwenkt werden kann und so von oben in der Regel von einer Seite in oder entgegen der Förderbandrichtung herabfallendes Material zur Mittelebene 20 umgelenkt werden kann. Dazu weist die Führungsklappe 11 grundsätzlich eine Rechteckform auf, die vorzugsweise eine Breite quer zur Förderbandrichtung und/oder eine Länge orthogonal zur Breite hat, wobei die Länge und Breite um ein Vielfaches größer sind als die Dicke.

Bevorzugt sind Befestigungsmittel zum Befestigen der Führungsklappe 11 in einer verschwenkten Position vorgesehen, damit die Führungsklappe 11 nicht manuell in der verschwenkten Position gehalten zu werden braucht, wobei eine bevorzugte verschwenkte Position vorzugsweise einen Winkel von mindestens 30° und/oder höchsten 60°, bevorzugt 45°, zu einer Vertikalen einschließt. Die Führungsklappe 11 weist eine radiale Kante auf, die an der zur Schwenkachse gegenüberliegenden Seite angeordnet ist und sich in Richtung der Breite der Führungsklappe 11 erstreckt. Die Schwenkachse und die Länge der Führungsklappe 11 sind so beschaffen, dass die radiale Kante beim Verschwenken von 30° bis 60° die Mittelebene 20 überschreitet und/oder bei etwa 45° (± 10°) an die Mittelebene 20° angrenzt. Der Strom kann so mit geringem Aufwand gleichmäßig in Förderbandrichtung verteilt werden.

Insbesondere weist die Führungsklappe 11 mindestens eine Ausnehmung, also einen Ausschnitt, und/oder höchstens zehn Ausnehmungen auf. Material, welches überwiegend oder vollkommen seitlich von der Mittelebene 20 von oben auf die Führungsklappe 11 trifft, gelangt so teilweise bereits durch die Ausnehmung oder Ausnehmungen auf eine der Umlenkrichtung entgegengesetzten Seite der Mittelebene 20. Vorzugsweise ist die Fläche, Anzahl oder Summe der Flächen der Ausnehmung oder Ausnehmungen so groß, dass mindestens 30%, und/oder höchstens 50% des auf die Führungsklappe 11 auftreffenden Materials die Ausnehmung oder Ausnehmungen passieren. Eine besonders gleichmäßige Verteilung der Halmhalbschalen auf beide Walzenreihen 2 kann so ermöglicht werden.

Insbesondere grenzt die Ausnehmung an die radiale Kante an und bildet eine U-form in der Kantenkontur, die bevorzugt rechteckförmig ist. Mehrere Ausnehmungen können ein insbesondere gleichförmiges Muster mit mehreren insbesondere gleich breiten U-förmigen Ausnehmungen bilden, wobei vorzugsweise die U-förmigen Ausnehmungen in Breitenrichtung einen Abstand voneinander haben, der einer Breite dieser U-förmigen Ausnehmungen entspricht. Die Breite einer Ausnehmung entspricht vorzugsweise mindestens dem dreifachen der Länge und/oder höchstens dem zehnfachen der Länge. Die Länge ist vorzugsweise größer als ein Zehntel der Länge der Führungsklappe 11 und/oder kleiner als die Hälfte der Länge der Führungsklappe 11.

Die oben beschriebenen Ausgestaltungen der Ausnehmung oder Ausnehmungen ermöglichen eine über die Breite besonders gleichmäßige Verteilung der Halmhalbschalen.

## Patentansprüche

1. Paneel, das als Faserwerkstoff ausschließlich Halme eines oder mehrerer Halmgewächse vorsieht, die mittels einer Zerspanungsmaschine in Halmlängsrichtung überwiegend zu länglichen, näherungsweise halbschalenförmigen Halmhalbschalen gespalten wurden und die mit einem Bindemittel versehen sind, wobei die Halmhalbschalen zu einem Anteil von mindestens 40% und höchstens 80% eine Länge kleiner als 4 mm aufweisen und das Paneel eine Dichte von mindestens 400 kg/m3 und/oder höchstens 950 kg/m³ hat.

2. Paneel nach dem vorhergehenden Anspruch, **dadurch gekennzeichnet, dass** das Paneel eine Dichteverteilung in Längserstreckung, also in Längsrichtung des Paneels, mit einer Standardabweichung von höchstens 20% aufweist.

3. Paneel nach einem der vorhergehenden Ansprüche, **dadurch gekennzeichnet, dass** das Paneel als Faserwerkstoff ausschließlich Stroh oder Reet oder eine Mischung aus Stroh mit einem Anteil von mindestens 10 % und/oder höchstens 40 % Reet aufweist und/oder eine Dichte von mindestens 520 kg/m³ zur Verwendung für lasttragende Anwendungen hat.

4. Paneel nach einem der vorhergehenden Ansprüche, **dadurch gekennzeichnet, dass** das Paneel nur eine oder höchstens drei Schichten Kraftpapier (29) unmittelbar auf einer unbehandelten Oberfläche aufweist.

5. Paneel nach einem der vorhergehenden Ansprüche, **dadurch gekennzeichnet, dass** das Paneel nur eine oder höchstens drei Schichten Kraftpapier (29) unmittelbar auf einer um höchstens 2 mm abgeschliffenen Oberfläche aufweist und/oder das Paneel eine Oberfläche mit durch Farbpigmente erzeugtes Dekor umfasst.

## Claims

1. Panel, which provides as fiber material exclusively stalks of one or more stalk containing plants, which have been split by means of a cutting machine in the longitudinal direction of the stalk predominantly into elongated, approximately half shell shaped stalk half shells and which are provided with a binder, wherein the stalk half shells have a length of less than 4 mm to a proportion of at least 40% and at most 80% and the panel has a density of at least 400 kg/m³ and/or at most 950 kg/m³.

2. Panel according to the preceding claim, **characterized in that** the panel has a density distribution in the longitudinal extent, hence in the longitudinal direction of the panel, with a standard deviation of at most 20%.

3. Panel according to one of the preceding claims, **characterized in that** the panel has exclusively straw or reed as fiber material or a mixture of straw with a proportion of reed of at least 10% and/or at most 40% and/or a density of at least 520 kg/m³, for the use for load-bearing applications.

4. Panel according to one of the preceding claims, **characterized in that** the panel has only one or at most three layers of kraft paper (29) directly on an untreated surface.

5. Panel according to one of the preceding claims, **characterized in that** the panel has only one or at most three layers of kraft paper (29) directly on a surface sanded by at most 2 mm and/or the panel comprises a surface with decoration produced by color pigments.

## Revendications

1. Panneau qui présente, comme matériau fibreuse, exclusivement des tiges d'une ou plusieurs plantes à tiges qui ont été fendues, au moyen d'une machine à couper, dans la direction longitudinale de la tige principalement en des tiges demi-coquilles allongées, approximativement en forme de demi-coquille et qui sont munies d'un liant, dans lequel les tiges demi-coquilles ont une longueur inférieure à 4 mm dans une proportion d'au moins 40% et au plus 80% et le panneau a une densité d'au moins 400 kg/m³ et/ou au plus 950 kg/m³.

2. Panneau selon la revendication précédente, **caractérisé en ce que** le panneau présente une distribution de densité dans la direction longitudinale, c'est-à-dire dans la direction longitudinale du panneau, avec un écart-type d'au plus 20%.

3. Panneau selon l'une des revendications précédentes, **caractérisé en ce que** le panneau présente, comme matériau fibreux, exclusivement de la paille ou du roseau ou un mélange de paille avec une proportion de roseau d'au moins 10% et/ou au plus 40% et/ou une densité d'au moins 520 kg/m³ pour utiliser dans des applications porteuses de charge.

4. Panneau selon l'une des revendications précédentes, **caractérisé en ce que** le panneau comprend seulement une ou au plus trois couches de papier kraft (29) directement sur une surface non traitée.

5. Panneau selon l'une des revendications précédentes, **caractérisé en ce que** le panneau ne comporte qu'une ou au plus trois couches de papier kraft (29) directement sur une surface abrasée d'au plus 2 mm et/ou le panneau comporte une surface présentant un décore créé par des pigments de couleur.
